# EUROPEAN PATENT SPECIFICATION

(11) **EP 3 699 825 B1**
(45) Date of publication and mention of the grant of the patent: **18.03.2026**
(21) Application number: 20158910.8
(22) Date of filing: 23.02.2020
(51) Int. Cl.: G06N 3/045, G06N 3/0464, G06N 3/0495, G06N 3/082, G06N 3/092, G06N 3/096, G06N 3/098, G06N 3/049, G06N 3/063

(54) **SYSTEMS AND METHODS FOR DEPLOYING AND UPDATING NEURAL NETWORKS AT THE EDGE OF A NETWORK**
SYSTEME UND METHODEN ZUR VERWENDUNG UND AKTUALISIERUNG NEURALER NETZWERKE AN DER RAND EINES NETZWERKS
SYSTÈMES ET PROCÉDÉS POUR DÉPLOYER ET METTRE À JOUR DES RÉSEAUX NEURAUX AU BORD D'UN RÉSEAU

(30) Priority: 22.02.2019 US 201962809353 P; 21.02.2020 US 202016797422
(43) Date of publication of application: 26.08.2020
(73) Proprietor: Ubotica Technologies Ltd., Dublin 11 (IE)
(72) Inventor: Dunne, Aubrey, Dublin, D11 KXN4 (IE); Buckley, Fintan, Dublin, D11 KXN4 (IE)
(74) Representative: FRKelly

(56) References cited:
- WO-A1-2019/009897
- US-A1- 2016 283 864
- US-A1- 2018 240 011
- JIANG ZHENG ET AL: "Training sample selection for deep learning of distributed data", 2017 IEEE INTERNATIONAL CONFERENCE ON IMAGE PROCESSING (ICIP), IEEE, 17 September 2017 (2017-09-17), pages 2189 - 2193, XP033322963, DOI: 10.1109/ICIP.2017.8296670
- UNKNOWN ET AL: "A Performance Evaluation of Federated Learning Algorithms", PROCEEDINGS OF THE SECOND WORKSHOP ON DISTRIBUTED INFRASTRUCTURES FOR DEEP LEARNING , DIDL '18, 1 January 2018 (2018-01-01), New York, New York, USA, pages 1 - 8, XP055651055, ISBN: 978-1-4503-6119-4, DOI: 10.1145/3286490.3286559

## Description

### BACKGROUND

Artificial intelligence (Al) and related technologies have seen significant advancements in recent years. In particular, neural networks have transitioned from being specialist academic projects to being used in mainstream commercial and consumer facing applications. These applications and technologies have the potential to solve a variety of long-standing technical challenges. However, existing and conventional solutions for deploying and using neural networks still include a number of significant limitations.

US 2018/240011 relates to techniques for training a central/global machine learning model in a distributed machine learning system. In the data sampling techniques, a subset of the data obtained at the local sites is intelligently selected for transfer to the central site for use in training the central machine learning model. In the model merging techniques, distributed local training occurs in each local site and copies of the local machine learning models are sent to the central site for aggregation of learning by merging of the models. As a result, in accordance with the examples presented herein, a central machine learning model can be trained based on various representations/transformations of data seen at the local machine learning models, including sampled selections of data-label pairs, intermediate representation of training errors, or synthetic data-label pairs generated by models trained at various local sites.

JIANG ZHENG ET AL: "Training sample selection for deep learning of distributed data", 2017 IEEE INTERNATIONAL CONFERENCE ON IMAGE PROCESSING (ICIP), IEEE, 17 September 2017 (2017-09-17), pages 2189-2193, presents a data sampling approach to deep learning, by carefully discriminating locally available training samples based on their relative importance. The document A. Nilsson et al., "A Performance Evaluation of Federated Learning Algorithms",Proceedings of the Second Workshop on Distributed Infrastructures for Deep Learning , DIDL '18, 1 January 2018 (2018-01-01), pages 1-8, discloses (sections 2,3) federated learning as a decentralized approach to machine learning where a global model is trained by aggregating locally trained models from edge devices. This method addresses challenges such as data privacy and network heterogeneity, which are prevalent in centralized systems. The document evaluates three federated learning algorithms: Federated Averaging (FedAvg), Federated Stochastic Variance Reduced Gradient (FSVRG), and CO-OP, using the MNIST dataset. FedAvg is noted for achieving high accuracy with i.i.d. data, while centralized learning outperforms FedAvg with non-i.i.d. data. The document highlights the importance of minimizing communication due to unreliable networks and limited upload speeds in federated learning.

### SUMMARY

The main embodiment of the invention is defined by the independent claims. Additional embodiments are set out in the dependent claims.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1A is component block diagram illustrating a system, which includes edge devices in the form of satellites and a centralized site/device connected to a series of transmission sites, that is suitable for implementing various embodiments.
FIG. 1B is component block diagram illustrating a system that includes different types of edge devices (i.e., a network of heterogeneous edge devices), and is suitable for implementing various embodiments.
FIGs. 2A and 2B are block diagrams illustrating edge devices suitable for implementing various embodiments.
FIG. 3 is a process flow diagram illustrating a method of deploying a new edge device in accordance with an embodiment.
FIG. 4 is an activity diagram illustrating a method of performing transfer learning in accordance with an embodiment.
FIG. 5 is a process flow diagram illustrating a method of improving or updating functionality on devices that use narrowband channels in accordance with some embodiments.
FIGs. 6-8 are activity diagram illustrating methods of updating neural networks on edge devices that have limited connectivity in accordance with various embodiments.
FIG. 9 is an activity diagram illustrating a method of updating a neural network on one or more edge devices without requiring transmission of neural network data in accordance with an embodiment.
FIG. 10 is an activity diagram illustrating a method of updating an edge device to account for sensor variations and faults in accordance with an embodiment.
FIG. 11 is an activity diagram illustrating a method of using information from proceeding edge devices in a chain of edge devices to update a neural network or otherwise improve or update the functionality of an edge device in accordance with an embodiment.
FIG. 12 is an activity diagram illustrating a method of updating a neural network to extend the mission of a deployed edge device in accordance with an embodiment.
FIGs. 13A-13C are process flow diagrams illustrating methods of updating neural networks on edge devices that have limited connectivity in accordance with some embodiments.
FIG. 14 is a component diagram of server computing device suitable for implementing some embodiments.

### DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention defined by the claims.

In overview, the various embodiments include a sensor-rich programmable artificial intelligence (AI) inference and compute platform that is suitable for deployment at the extreme network edge, from the oceans of earth to low earth orbit, geosynchronous orbit and deep space. The AI inference and compute platform, alternatively termed the AI inference engine or the AI engine, may use machine learning accelerators, neural network accelerators, convolutional neural network accelerators, neuromorphic accelerators or a combination thereof, or may contain solely general compute.

The word "exemplary" is used herein to mean "serving as an example, instance, or illustration." Any implementation described herein as "exemplary" is not necessarily to be construed as preferred or advantageous over other implementations.

The term "computing device" may be used herein to refer to any one or all of server computing devices, personal computers, laptop computers, tablet computers, edge devices, user equipment (UE), multimedia Internet enabled cellular telephones, smartphones, smart wearable devices (e.g., smartwatch, smart glasses, fitness tracker, clothes, jewelry, shoes, etc.), Internet-of-Things (IoT) devices (e.g., smart televisions, smart speakers, smart locks, lighting systems, smart switches, smart doorbell cameras or security systems, etc.), connected vehicles, and other similar devices that include a memory and programmable processor for providing the functionality described herein.

The term "edge device" may be used herein to refer to any one or all of computing devices, satellites, connected vehicles (trucks, cars, etc.), electric scooters, trains, trams, metros (which often only have connectivity for brief periods while in stations), aircraft, drones (based on land, in sea, or in the air), high-altitude balloons, smartphones, smart wearable devices, IoT devices, eMobility devices (e.g., electric scooters, electric bikes), robots, nanobots, and other similar computing systems, devices or objects that include a memory, a sensor, a processor, and communications circuity for communicating with computing devices at one or more centralized sites. The processor may be a programmable processor or a fixed programmed processor (e.g., a preprogrammed FPGA or an ASIC) with associated reconfigurable parameters stored in an associated memory. Edge devices are often resource-constrained devices that have limited processing, memory, battery and/or bandwidth resources.

The term "centralized site" may be used herein to refer to a control site that includes one or more computing devices (or "centralized devices") that are configured to initiate, provision, store data on (e.g., collected data, data obtained from other sources, augmented data, etc.), enable labeling on, train, communicate with and/or control edge devices. For ease of reference and to focus the description on the relevant features or functionalities, some embodiments are described herein with reference to a "centralized site/device" on earth and one or more edge devices deployed in space. However, it should be understood that the described features and functionalities may be applicable to other types of edge devices, systems, configurations or deployments. As such, nothing in this application should be used to limit the claims or disclosures herein to a centralized site/device on earth and edge devices deployed in space unless expressly recited as such within the claims.

The term "AI edge device" may be used herein to refer to an edge device that is configured to perform AI operations locally on the device and/or to work in conjunction with other devices (e.g., another edge device, centralized site/device, etc.) that perform AI operations. For example, an AI edge device may be an edge device that includes an edge AI processor configured to perform "inference" and/or to otherwise deploy or use a neural network that utilizes or accomplishes machine learning locally on the device. As another example, an AI edge device may be configured to collect data (on which to action) on the edge device, send the collected data to a centralized site/device that performs inference to generate an overall inference result, receive the overall inference result from the centralized site/device, and perform an action based on the received overall inference result. An AI edge device may also be part of a group of edge devices (potentially of different types) that work in conjunction with one another to accomplish federated learning.

The term "AI model" may be used herein to refer to wide variety of information structures that may be used by a computing device to perform a computation or evaluate a specific condition, feature, factor, dataset, or behavior on a device. Examples of AI models include network models, neural network models, inference models, neuron models, classifiers, random forest models, spiking neural network (SNN) models, convolutional neural network (CNN) models, recurrent neural network (RNN) models, deep neural network (DNN) models, generative network models, and genetic algorithm models. In some embodiments, an AI model may include an architectural definition (e.g., the neural network architecture, etc.) and one or more weights (e.g., neural network weights, etc.).

The terms "collected data", "acquired data", "sensed data", and "measured data" may all be used herein to refer to data acquired by an edge device (e.g., using its sensors, etc.).

The term "neural network" may be used herein to refer to an interconnected group of processing nodes (or neuron models) that collectively operate as a software application or process that controls a function of a computing device and/or generates an overall inference result as output. Individual nodes in a neural network may attempt to emulate biological neurons by receiving input data, performing simple operations on the input data to generate output data, and passing the output data (also called "activation") to the next node in the network. Each node may be associated with a weight value that defines or governs the relationship between input data and output data. A neural network may learn to perform new tasks over time by adjusting these weight values. In some cases, the overall structure of the neural network and/or the operations of the processing nodes do not change as the neural network learns a task. Rather, learning is accomplished during a "training" process in which the values of the weights in each layer are determined. As an example, the training process may include causing the neural network to process a task for which an expected/desired output is known, comparing the activations generated by the neural network to the expected/desired output, and determining the values of the weights in each layer based on the comparison results. After the training process is complete, the neural network may begin "inference" to process a new task with the determined weights.

The term "inference" may be used herein to refer to a process that is performed at runtime or during execution of the software application program corresponding to the neural network. Inference may include traversing the processing nodes in the neural network along a forward path to produce one or more values as an overall activation or overall "inference result."

The term "central inference" may be used herein to refer to inference that is performed at a centralized site/device (or in a server, the cloud, etc.) based on data collected on the edge device or at the edge of the network.

The term "edge-based inference" may be used herein to refer to inference that is performed on the edge device.

The term "deep neural network" may be used herein to refer to a neural network that implements a layered architecture in which the output/activation of a first layer of nodes becomes an input to a second layer of nodes, the output/activation of a second layer of nodes becomes an input to a third layer of nodes, and so on. As such, computations in a deep neural network may be distributed over a population of processing nodes that make up a computational chain. Deep neural networks may also include activation functions and sub-functions between the layers. The first layer of nodes of a multilayered or deep neural network may be referred to as an input layer. The final layer of nodes may be referred to as an output layer. The layers in-between the input and final layer may be referred to as intermediate layers.

The term "convolutional neural network" may be used herein to refer to a deep neural network in which the computation in at least one layer is structured as a convolution. A convolutional neural network may also include multiple convolution-based layers, which allows the neural network to employ a very deep hierarchy of layers. In convolutional neural networks, the weighted sum for each output activation is computed based on a batch of inputs, and the same matrices of weights (called "filters") are applied to every output. These networks may also implement a fixed feedforward structure in which all the processing nodes that make up a computational chain are used to process every task, regardless of the inputs. In such feed-forward neural networks, all of the computations are performed as a sequence of operations on the outputs of a previous layer. The final set of operations generate the overall inference result of the neural network, such as a probability that an image contains a specific object (e.g., a person, cat, watch, edge, etc.) or information indicating that a proposed action should be taken.

The term "ensemble neural network" may be used herein to refer to a neural network that includes one or more sub-networks. The overall inference result from an ensemble neural network may be a weighted combination of the inference result of the individual neural networks in the ensemble. The processing nodes (e.g., neuron models, etc.) in an ensemble neural network are typically smaller than their corresponding single network equivalents that perform the same or similar prediction functions. As such, ensemble neural networks may be more suitable for receiving updates over a low-bandwidth channel than their non-ensemble counterparts.

The term "feature vector" may be used herein to refer to an information structure that represents or characterizes collected data (e.g., sensor data, etc.) or which represents or characterizes a specific factor, feature, condition, data point, or aspect of collected data. A feature vector may include one or more features and their corresponding feature values. A feature value may be a number or symbol that represents a collected data point. A feature value may be associated with a data type that identifies how a feature (or its feature value) should be measured, analyzed, weighted, or used. For example, a data type may identify a range of possible feature values, meanings of the values, operations that may be performed on those values, etc.

The term "classifier" may be used herein to refer to an AI model and/or information structures that may be used by a device processor to evaluate collected data or a specific feature (or factor, condition, data point, operation, component, etc.). For example, a classifier may include decision nodes (e.g., neural networks, decision stumps, boosted decision trees, etc.) that each include a weight value and a test question/condition suitable for evaluating the collected data. As a simplified example, a classifier may include a decision stump or neural network that evaluates the condition "is road surface roughness greater than 3.5 millimeters per meter (mm/m)." In this example, applying a feature vector that includes a "road surface roughness" feature having a feature value of "3" to the classifier may generate a result that indicates a "no" answer via a number, such as "0."

A classifier may include multiple decision nodes and a feature vector may include multiple features. As such, applying a feature vector to a classifier may generate a plurality of answers to a plurality of different test conditions. Each of these answers may be represented by a numerical value. The device processor may multiply each of these numerical values with their respective weight value to generate a plurality of weighted answers. The device processor may then compute or determine a weighted average based on the weighted answers, compare the computed weighted average to one or more threshold values, and perform a responsive action (e.g., classify/label the collected data, etc.) based on the results of the comparison. For example, if the computed weighted average is "0.79" and the threshold value for "scooter-specific micromovement (shake)" is "0.75," the device processor could determine that the collected dataset is suitable (or that it is not suitable) for use in training a neural network for a e-scooter edge device.

The term "ensemble classifier" may be used herein to refer to a group of classifiers that includes an initial classifier and one or more subsequent classifiers. Each classifier in the ensemble classifier may be a different type of classifier, may include different types of decision nodes, may implement different AI models, may focus on evaluating a different feature and/or may focus of evaluating a different aspect of the same feature.

In recent years, the concept of deploying neural networks to edge devices has become a feasible reality. However, as machine learning (ML) and artificial intelligence (AI) move to the edge, it is likely that there will be new challenges that emerge in relation to efficient and effective deployment and operation of neural networks in edge devices. Such challenges are particularly acute in systems or applications where bandwidth between the centralized site/device and the edge device is restricted, limited, intermittent, and/or non-reliable. Moreover, the available compute power at the edge device may be significantly less than that available at centralized site/device, meaning that neural networks suitable for central inference are not always suitable for edge-based inference. Not only is compute power a potential limitation at the edge, but available system electrical power is also typically limited at the edge, meaning that deployed edge devices may be required to use efficient, and potentially customized, neural networks in order to adhere to these limitations.

There are many examples of potential applications for artificial intelligence being implemented at the edge of the network, any or all of which may be implemented, facilitated, supported, enabled, allowed or used by the various embodiments. Some of these examples/applications relate to edge devices that operate at significant distances from the centralized site, such as satellites operating in space (e.g., low earth orbit, geosynchronous orbit, and deep space), submersible drones working on the seabed (e.g., searching for plane wreckage, conducting seismic surveys, oil exploration and extraction), or vehicle mounted IoT devices that continuously transit between communications networks (e.g., vehicle systems monitoring, driver attention and performance monitoring, or cargo monitoring). Consequently, these edge devices may have very limited bandwidth capabilities (e.g., very low throughput, very high round trip time, high latency, etc.).

Further examples relate to edge devices that do not have reliable connections to the centralized site, but yet they need to be able to continue operating autonomously when they experience connectivity failures or transit into/through connectivity blackspots, such as drones performing search and rescue operations for humans in hazardous environments (e.g., in partially collapsed buildings after an earthquake, in deep cave systems, in buildings where there are active fires, explosions, chemical leaks, and radiation leaks).

There are also likely to be commercial applications (e.g., maintenance robots operating in sewers, mining drones operating deep below the surface of the earth, delivery drones delivering online purchases of food and goods), law enforcement applications (e.g., using satellite imaging to detect illegal drug growing and processing facilities, monitoring immigration and smuggling in remote locations) and military applications (e.g., airborne drones must be able to continue operating when they lose their connections to the centralized site due to signaling jamming or due to physical damage, soldiers wearing or using smart equipment must be able to depend on it to function in autonomous situations). In addition, there may be applications relating to assisted and independent living for ill or elderly people (e.g., smart glasses may be able to detect that a cancer patient takes the right medication at the right times of the day, a smart watch may be able to "recall" important notes or reminders throughout the day for a dementia sufferer).

In any or all of the above examples/applications, the edge devices may be extremely small or resource-constrained, and thus not have the power necessary to establish and maintain a connection to a centralized site/device at all times. For example, edge devices in the form of small robots operating within a human's blood stream (called "nanobots") may only be able to establish a connection to a centralized site/device when they are in a large vein or artery that is close to the surface of the human.

In some applications, the edge device may be connected to a high-performance sensor that generates more data than can be feasibly sent to the centralized site/device (or downlinked, etc.) due to the deployment scenario (such as hyperspectral sensors on satellites). In these cases, a neural network implemented on the edge device may enable digestion of the data at the network edge. The overall inference result of the neural network, along with optionally some of the raw data, may be sent to the centralized site/device, but importantly the volume of data to be sent is much less than for non-AI solutions in which the entire set of hyperspectral data needs to be sent to the centralized site/device. As sensors gain in resolution (e.g., in any one or any combination of spatial, spectral and temporal resolution, etc.) it becomes increasingly important to digest the data on the edge device using AI (e.g., by performing edge-based inference, etc.).

The various embodiments include components (e.g., edge devices, etc.) that are configured to perform edge-based inference so as to overcome the above described challenges and limitations.

The benefits of edge-based inference over central inference include a reduction in latency (to actionable event), a reduction in required transmission bandwidth (compared to centrally based inference), and an increase in data security (e.g., because personal, sensitive, confidential, or secretive data is not required to be transferred off the edge device, etc.).

Edge-based inference may reduce or eliminate many of the data transmissions associated with central inference, and thus reduce the required transmission bandwidth. The reduction in the required transmission bandwidth may be a direct result of where the inference is performed. For example, central inference may require collecting data (on which to action) from the edge device, sending the collected data to the centralized site/device that performs the inference to generate the overall inference result, and sending the overall inference result from the centralized site/device to the edge device so that it may analyze the overall inference result and/or perform an action based on the overall inference result. In contrast, edge-based inference may include collecting data on the edge device and performing inference locally on the edge device to generate the overall inference result. The edge device may send the overall inference result to the centralized site/device and/or work in conjunction with the centralized site/device to analyze or use the overall inference result. Alternatively, the edge device may perform an action on the inference result directly without transmitting the overall inference result back to the centralized site/device. In all these examples, edge-based inference may reduce the required transmission bandwidth by eliminating or significantly reducing the amount of data that is communicated between the edge device and the centralized site/device.

For example, edge-based inference could be used in an obstacle avoidance application in autonomous vehicle navigation in which the important action is that the vehicle navigates to avoid the obstacle. After this action (navigating to avoid the obstacle), there is no need to send either the collected sensor data or the overall inference results back to the centralized site/device. Since little or no data is transmitted to the centralized site/device, using edge-based inference could significantly reduce the required transmission bandwidth of the obstacle avoidance application, allowing it to be deployed on smaller, more remote, or more resource constrained devices.

Some of the examples and applications above may include the edge device sending the overall inference result to the centralized site/device. Edge-based inference could also reduce the required transmission bandwidth for these examples and applications as well. This is because sending the overall inference result requires significantly less bandwidth and/or power than sending the collected data (as is often required for central inference). For example, image/video data (e.g., a retinal image, a video stream, etc.) collected in an edge device may include megabytes, gigabytes or terabytes of raw data, whereas the overall inference result may be a few bytes representing the probability that person associated with a retinal image (e.g., the collected image/video data) may have early onset of diabetic retinopathy.

Edge-based inference may reduce the required transmission bandwidth by eliminating or significantly reducing the volume of the data that is communicated (e.g., by an order of magnitude or more) between the edge device and the centralized site/device. This reduction in transmission bandwidth may allow for the deployment and use of edge devices that do not have high bandwidth communication resources.

The lack of high bandwidth communication resources could limit an edge device's ability to receive updates (e.g., via over the air updates, etc.). For example, an application update may require updating the entire neural network, but neural networks typically have a large memory footprint (e.g., in the order of megabytes, but possibly up to hundreds of megabytes or more). As a result, the bandwidth and power required to transmit or receive the entire neural network could prevent edge devices that do not have high bandwidth communication resources from receiving updates. Some embodiments may eliminate or reduce the amount of data transmissions required to update an edge device, allowing edge devices that lack high bandwidth communication resources to receive updates after deployment in the field.

As mentioned above, using conventional solutions, the lack of high bandwidth communication resources in an edge device may limit the device's ability to receive updates. A particular case of the above problem occurs for updates that include a new neural network (or new model), such as a neural network produced by retraining a previously deployed neural network with data collected from one or more edge devices. In this case, the network architecture is unchanged by the update. All that is changed is the weights within the network.

An example of this is for an edge device that is deployed to a location from which data has not previously been collected, and in which the initial neural network is trained based on data collected from an alternative location and/or synthetic data and/or augmented data. That is, because data was not available from the deployment location, the training was conducted with data that is only representative of the final deployment location. The edge device is deployed pre-loaded with an initial neural network that is likely to be suboptimal for the final deployment location. Once the edge device is in its final location, the device may collect data from the actual sensors in the deployment location and perform edge-based inference. However, due to the difference between the training data used to train the network and the runtime data acquired at the final edge location with the deployed sensor (and other differences due to environmental effects, etc.), such inference operations may produce inaccurate (or not optimum) results.

In the above example, the accuracy of the inference operations could be improved by sending data captured in the deployment location to the centralized site/device for additional training. The centralized site/device could perform additional training (possibly by transfer techniques) on the neural network to produce a new set of neural network weights that are more accurate or optimal for the data acquired at the edge device location, and send the edge device a new neural network that includes the new network weights. The edge device could then use the new neural network to update the pre-loaded initial neural network.

An example of where the above scenario occurs is for edge devices deployed on satellites, particularly in the field of earth observation. When an earth observation sensor (optical, Synthetic Aperture Radar (SAR) etc.) is integrated into a satellite prior to launch, in-orbit data for this sensor may not already be available. This is particularly the case for new sensors that have not flown in orbit previously. Satellite imagery captured by other 'similar' sensors could be used (e.g., after augmentation to map the known characteristics of the sensor to the imagery, etc.) to generate data that mimics the data expected to be captured by the sensor in orbit. The neural network is then trained with this data. This data is typically plentiful. The edge device is then pre-loaded with the resulting neural network prior to launch. Once in orbit, real data captured by the sensor may be sent to the centralized site/device on the ground, where it may be used to update the neural network via additional training cycles. Typically, the amount of such data sent from the satellite to the centralized site/device is much smaller than the original corpus of training data. Once the additional training cycles have been completed, the updated weights of the neural network are sent (e.g., uplinked, uploaded, etc.) to the edge device on the orbiting satellite. Uplink bandwidth (upload bandwidth) is often even more restricted than downlink bandwidth (download bandwidth) for space applications (typically there is an asymmetric data link to the satellite), hence minimizing the size of the update is important.

Another example of a deployment where neural network updates are required, and in which the available bandwidth over which to deploy this neural network is typically limited, is for IoT devices in the field. A further consideration here is that the power required to transmit data can be significant for deployed IoT devices, which are often powered either by battery or solar cell, or both. Reducing the amount of data that is transmitted or received may extend the operational life of the edge device due to power savings.

There are two considerations when examining methods for efficient updating of deployed neural networks. Firstly, the scenario of a neural network that has already been deployed must be considered (termed 'efficient model update methods'). In this scenario, the task is to develop techniques to reduce the size of the updates or volume of data transmissions. Secondly, the scenario of an application that has not yet been deployed should be considered (termed "model architectures for efficient updates"). In this case the task is to provide network architecture design guidelines to enable the selection of a network architecture that is inherently suited to efficient updates in the future.

Edge-based inference may only require that metadata be transmitted back to the centralized site/device, cloud or users, vastly reducing the time and bandwidth required to generate alerts particularly where video or high resolution image data is being used as input to the inference engine. These alerts may be notifications of forest fires, blight conditions, or destructive insect promulgations. The alerts may be used as inputs for further actionable events that could occur automatically and without any human intervention. These actionable events may be navigation controls for autonomous vehicles or satellites (obstacle avoidance, uncooperative object grasping, collision avoidance), re-orientation or reconfiguration of sensors on the edge device (re-calibrating sensors based on environmental changes or wear and tear, re-pointing of satellite earth observation sensors towards ground features of interest or away from cloud-obscured regions), or changing the power state of the device (throttling of device throughput (reducing frame rate or inference rate) to conserve power when certain conditions are detected).

The edge-based AI platform may also run individual networks that have been programmed into the platform before launch time, but more interestingly the platform may be updated in the field with completely new networks, or existing networks may be upgraded, or indeed parallel networks may be combined to form ensemble neural networks that improve accuracy.

As artificial intelligence solutions become enabled for space applications, methods for tuning and improving the neural networks in-orbit may become critical to fully realizing artificial intelligence's potential in space. Continuous (or intermittent) neural network tuning may improve the neural network's effectiveness, may enable the neural network to adapt to the specific sensor(s) of the deployment hardware, and may enable the neural network to adapt to changes in sensor performance over time. A challenge for in-orbit applications of artificial intelligence is to perform these in-flight updates efficiently in the context of the limited bandwidth of the uplink path. A second challenge is to minimize the frequency with which it is required to update neural networks in-flight via the ground uplink channel.

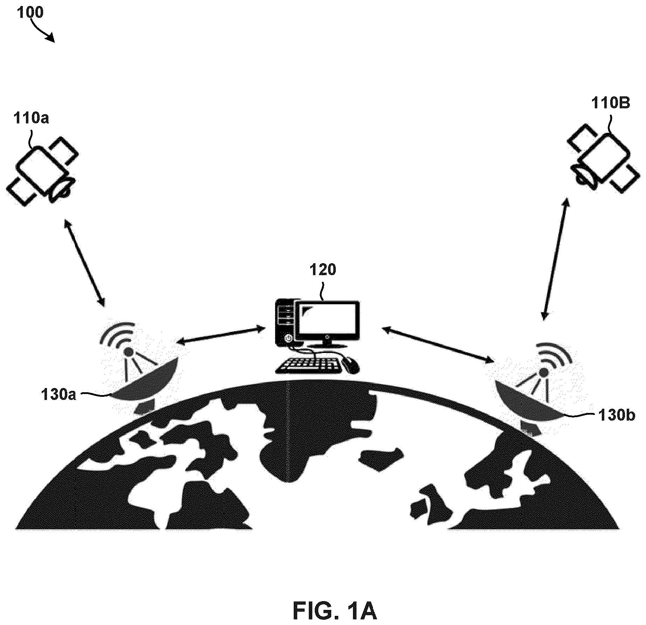

FIG. 1A illustrates a system 100 that includes edge devices 110a, 110b that could be configured in accordance with the embodiments. In the example illustrated in FIG. 1A, the system 100 includes edge devices 110a, 110b that are satellites in space, and a centralized site/device 120 that is connected to a series of transmission sites 130a, 130b dispersed around the world to provide suitable coverage.

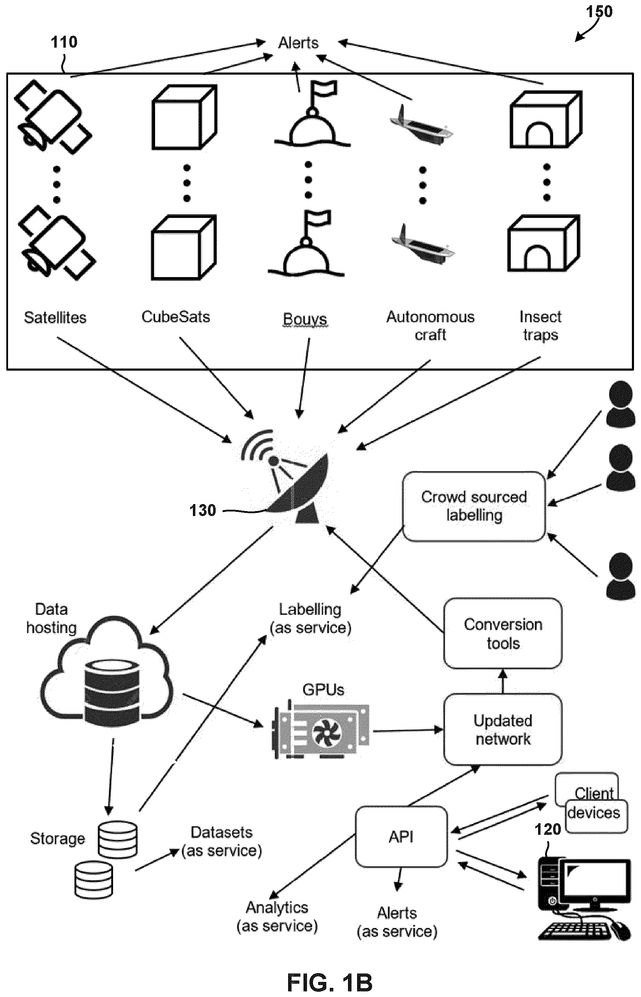

FIG. 1B illustrates another system 150 that includes edge devices 110 that could be configured in accordance with the embodiments. In the example illustrated in FIG. 1B, the system 150 includes various different types of edge devices 110 (i.e., a network of heterogeneous edge devices). These heterogenous devices may be located underground, underwater (submersibles), on land (robots, e-mobility devices, mobile phones, IoT devices, insect traps), on the sea (watercraft, buoys), in the lower atmosphere (drones, planes), in the upper atmosphere (high altitude balloons), in earth orbit (satellites) or in deep space (exploration missions). Data collected from these edge devices 110 may be transmitted to the centralized site/device 120, from where it can be stored, processed, labelled, delivered, served, queried, analyzed, and used for training. In the AI context, this data may require some level of labelling before training can be initiated. Human-in-the-loop training may be accomplished via a crowd sourced labelling API. Training at the centralized site/device 120 may use general-purpose graphics processing units (GPGPUs) to enhance throughput.

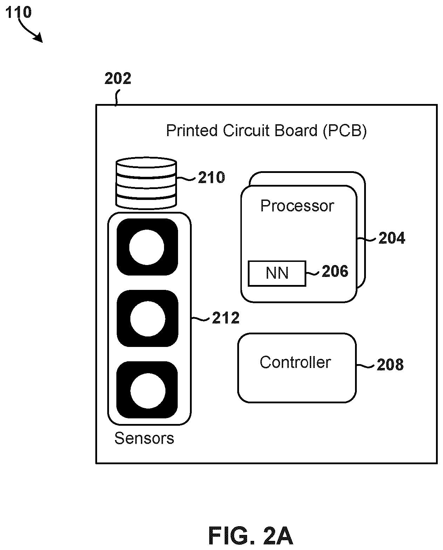

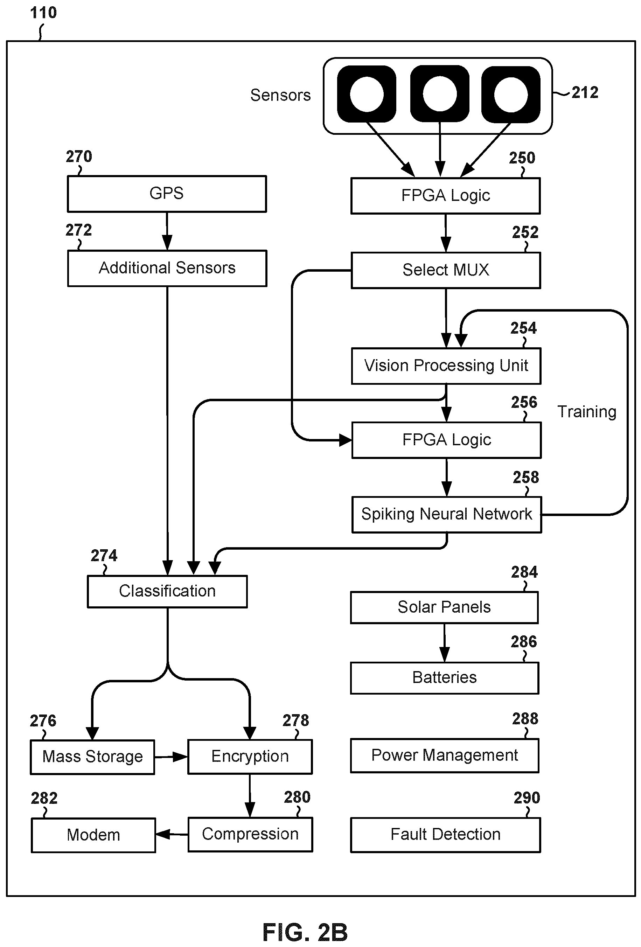

FIGs. 2A and 2B illustrate components in an edge device 110 that could be configured in accordance with the various embodiments. In the example illustrated in FIG. 2A, the edge device 110 includes a printed circuit board (PCB) 202 that includes one or more processors 204, neural networks (NN) 206, a controller 208, storage memory 210, and sensors 212. In the example illustrated in FIG. 2B, the edge device 110 includes sensors 212, FPGA logic components 250, 256, a select multiplexer (MUX) component 252, a vision processing unit 254, a spiking neural network component 258, a global positioning system (GPS) component 270, additional sensors 272, a classification component 274, mass storage 276, an encryption component 278, a compression component 280, a modem 282, solar panels 284, batteries 286, a power management component 288, and a fault detection component 290, any or all of which may be implemented in software, hardware, or a combination thereof.

The sensor(s) 212 may capture data about the internal or external environment of the device, or about a remote environment that is targeted by the sensor(s) 212. In some embodiments, the multiple sensors 212 may capture a variety of data types, or orthogonal data. The combination of the data from various sensor types may be processed by the edge device 110 (or a processor 204 in the edge device 110, AI processor, etc.) in order to determine a more valuable result (e.g., a heads-up-display used by a fire-fighter may combine multiple types of captured data from multiple sensing paradigms such as visible spectrum, short-wave infrared, thermal infrared, night-vision, ultrasonic sounds to create a more holistic combined result relating to the immediate environment of the firefighter). This is the sensor fusion paradigm. The controller 208 may be configured to manage the system and its interface to the centralized site/device, and to perform an action based on the produced metadata. Storage memory 210 on the edge device 110 may enable autonomous operation, by storing sensed data and/or metadata for later communication to a centralized site/device. The storage memory 210 may also allow the edge device 110 to store the neural network(s) 206 locally on the device.

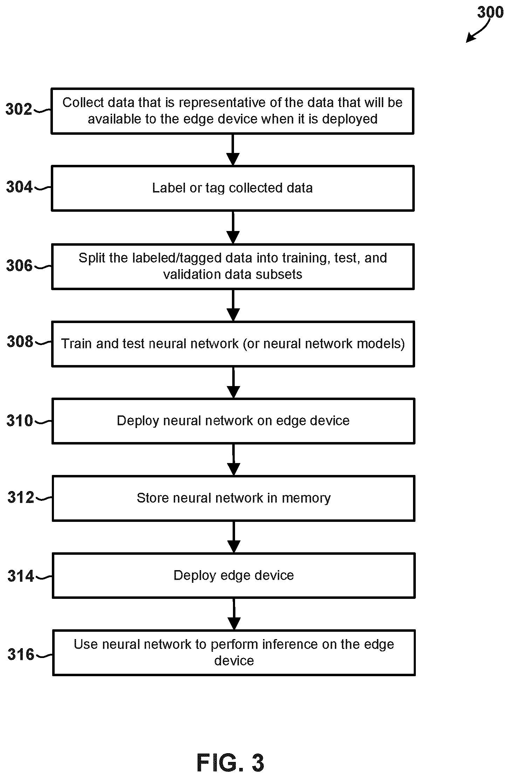

FIG. 3 illustrates a method 300 for deploying an edge device 110 that is suitable for performing edge-based inference in accordance with some embodiments. Method 300 may be performed by one or more processors in one or more computing devices (e.g., centralized site/device 120, server computing device, edge device 110, etc.).

**In** block 302, a device processor (e.g., in a centralized site/device 120, etc.) may collect data that is representative of the data that will be available to the edge device 110 when it is deployed (typically this is sensor data, e.g., images for an image sensor). In block 304, the processor may label or tag the data, such as by performing or implementing a human-in-the-loop technique. For the example task of object detection in images, labelling in block 304 may take the form of identifying and/or highlighting positive examples of the object to be detected within the images in the dataset.

In block 306, the processor may (randomly) split the data into training, test, and validation data subsets. In block 308, the processor may use the training and test datasets to train neural networks (or models). The training dataset may be augmented via mathematical operations, and this augmented data may be added to the training dataset to increase the size of the dataset whilst maintaining its relevance. It may also be increased by using a synthetically generated dataset, e.g., by synthesizing data from a mathematical model. The test dataset may also be used to evaluate the trained neural network (e.g., to trade-off against other neural networks).

Once the neural network has been trained and tested, it may be deployed to the edge device(s) 110 in block 310. This may involve optimization (e.g., pruning) and conversion of the neural network to target specific hardware of the edge device 110.

In block 312, a processor in the edge device 110 may store the neural network in its local memory. In block 314, the edge device 110 may be deployed to the field, whereupon the neural network may be used in block 316 to perform inference on sensor data on the edge device 110. It may not be required to modify the neural network once the edge device 110 is deployed. The more similar the sensor data received by the edge device 110 is to the dataset on which the neural network was trained, the more effective the inference (or edge device 110) is.

Deploying edge devices 110 in harsh or inaccessible locations, or in deployments that are expensive due to their locations, may result in limited effectiveness of the device (or the inference operations) when it is initially operated and implementing its pretrained neural networks. Due to the relatively few devices deployed prior to any new deployment, there may be a lack of available training data. For example, earth observation sensors on satellites are only infrequently launched into orbit due to the large cost of such missions, and therefore for any particular earth observation sensor there may be very limited data available at the centralized site/device to facilitate training (few devices in orbit therefore limited data available). Further, the data from the limited deployments that is available on the ground (to the centralized site/device) may be sensitive (military), or may require extensive processing (delay in availability), and in general may not be shared between organizations or made available for training.

E-scooters is an example application deployment for which there may be a lack of available training data due to the relatively recent deployment of e-scooters on public roads, and the lack of video data capture capability on these devices. In this case it is not the sensors that are new, nor the difficulty in acquiring the data, but rather that the application itself is new and that it takes time to acquire large and representative datasets for new applications. Additionally, and importantly, due to enhancements in technology, newly deployed edge devices 110 may be more advanced and therefore their neural networks may be most effective if they have training data that is specific to the sensor at the training stage. Examples of such cases are sensors that have higher resolutions, have greater sensitivities, have higher accuracies or that have completely new sensing modalities.

Improved or optimum inference performance may be obtained when the neural network is trained on data from the same sources as those which generate data during inference. For example, only very recently have high spectral resolution hyperspectral sensors been deployed in small satellites (and therefore small form factor sensors) in orbit. New hyperspectral imagers may have more spectral bands than older sensors, and any neural network operating on data from the new hyperspectral sensor may use spectral bands that are not available on the old sensors. This new data cannot be readily acquired from existing sensors in the field because no such sensors exist in the field (the existing edge devices 110 would be fitted with the old sensors).

Even existing and established sensors, when deployed in the field in certain scenarios of interest, may perform in unforeseeable ways (or in ways previously unseen). In the e-scooter example above, image sensors deployed in e-scooters as they traverse municipalities may display scooter-specific micromovement (shake) due to the road surface roughness, the scooter tires, and the scooter suspension. A neural network trained on sensor data gathered for a car-mounted sensor may not exhibit this shake, and therefore an effective dataset for training of an e-scooter solution may not be available at initial deployment of the neural network to the e-scooter edge device 110.

The various embodiments may include transfer learning methods that allow for the training of neural networks on new edge devices 110 using data acquired from other edge devices 110 that are already deployed in similar environments. This enables the neural network to be customized to the hardware of the edge device 110 early in the life cycle of the edge device 110, which may result in valuable time savings. In particular, these embodiments may overcome the technical challenge of not being able to gather training data from the device before launch. For example, a neural network that is configured to perform predictive analytics in accordance with the embodiments (e.g., crop failure prediction based on hyperspectral sensor data from satellites, classification of land as fire risk due to its spectral signature as seen in earth observing sensors, etc.) could be effective immediately after deployment of the edge device 110 and thereby provide instant predictions without first requiring a data collection and retraining cycle. An edge device 110 configured to perform such predictive analytics may be of use to land use planners, insurance companies, and national governments.

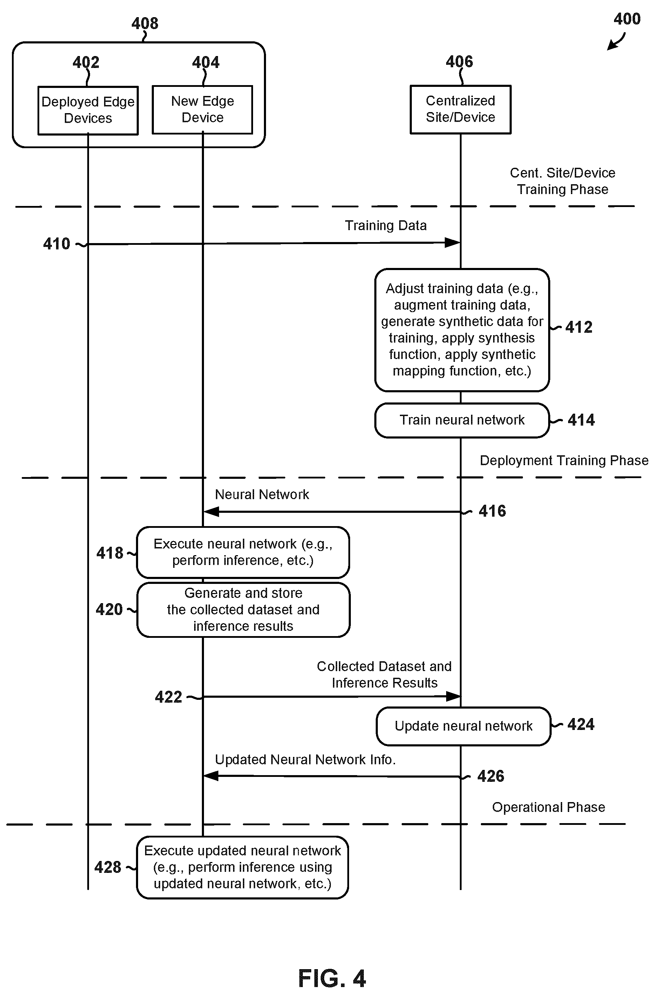

FIG. 4 illustrates a method 400 for performing transfer learning in accordance with an embodiment. Method 400 may performed in a system that includes one or more deployed edge devices 402, a new edge device 404 that has yet be deployed and/or which is yet to receive information (e.g., an updated neural network, updated models, updated weights, etc.) based on the transferred learning, and a centralized site/device 406 (or a connected group of centralized sites/devices). The deployed edge devices 402 and the new edge device 404 may be at a remote location or locations 408 relative to the centralized site/device 406. For example, edge devices 402, 404 may be included in satellites orbiting the earth, and the centralized site/device 406 may be located on the surface of the earth.

The operations 410-428 of method 400 may be performed in phases. For example, operations 410-414 may be performed during a centralized site/device training phase, operations 416-426 may be performed during a deployment training phase, and operation 428 may be performed during an operation phase.

**In** operation 410, the centralized site/device 406 may receive a dataset or training data from one or more of the deployed edge devices 402. The deployed edge devices 402 may be the same or similar to the new edge device 404 that is to be deployed, or they may differ (e.g., may be an older version, contain different sensors, be configured in a different way, etc.).

In operation block 412, the centralized site/device 406 may determine whether the training data should be adjusted and/or adjust the training data (if needed). In some embodiments, the centralized site/device 406 may be configured to adjust the training data (or determine whether the training data should be adjusted) based on a known relationship between the sensors on the deployed edge devices 402 and the sensors in the new edge device 404. For example, the centralized site/device 406 may determine that the optical sensors in the deployed edge devices 402 use an older sensor whose saturation profile is different from the sensors in the new edge device 404, and thus that the saturation information in the training data needs adjustment. In response, the centralized site/device 406 may adjust the training data to account for the differences in the saturation profiles of the sensors.

In another example, it may be known to the centralized site/device 406 that a sonar sensor in a submarine (or a submersible drone working on the seabed) produces inaccurate results when the submarine is on the surface of the water, and that training data acquired at this depth should be filtered and excluded. As such, in operation block 412 the centralized site/device 406 may determine whether any of the received training data was collected by a sonar sensor in a submarine and the depth at which any such training data was collected. The centralized site/device 406 may adjust the training data in response to determining that the training data was collected by a sonar sensor in a deployed submarine when the submarine was on the surface of the water.

Similarly, in an e-scooter example, the centralized site/device 406 may determine in operation block 412 whether existing data from a sensor to be deployed is already available from dash-cam automobile data. The centralized site/device 406 may adjust the received training data to incorporate image shake via a mathematical model of road roughness and scooter suspension in response to determining that the data from the sensor to be deployed is already available from the dash-cam automobile data. In an autonomous or self-driving car example, the centralized site/device 406 may determine that the new deployment of sensors is physically located at a higher point on the car than that from which the training data was collected (i.e., having a different perspective of the road), and adjust the training data (e.g., via an image transform, etc.) to fully or partially account for any such variation in viewpoint before training the neural network for the new deployment.

In some embodiments, in operation block 412, the centralized site/device 406 may synthesize data or generate synthetic data for training, which may include determining and/or applying a synthesis function and/or a synthetic mapping function. For example, in operation block 412, the centralized site/device 406 may determine or apply a synthesis function that maps existing data from the deployed edge devices 402 to synthetic data for the new edge device 404 that is representative of the expected data that the sensors in the new edge device 404 may acquire when deployed. In one example, the sensor on the new edge device 404 may be a hyperspectral sensor, and the synthesis function may map existing hyperspectral bands from existing data to the most appropriate hyperspectral bands of the new sensor. The mapping may take only a subset of the available bands in order to produce the new synthetic data, or it may combine bands from one or more hyperspectral sensors using a specific weighting in order to determine an effective mapping function. In an autonomous robot implementation, the existing available image dataset for training may have been captured from sensors with a specific orientation and height above ground. For the new deployment, the sensors may have a different orientation and mounting height above ground. The centralized site/device 406 may compute a mathematical image transform between the two sensor positions, which may map the images in the existing dataset to synthetic images that mimic those that would be captured from the new sensor position on the new robot deployment.

Also in operation block 412, the centralized site/device 406 may apply a synthetic mapping function to existing labelled data from the deployed edge devices 402 in order to generate labelled training data for training the neural network of the new edge device 404. This is important, because if the centralized site/device 406 can derive a mathematical model that transforms the existing dataset to the synthetic dataset, then the centralized site/device 406 may also automatically transform the labels in the existing dataset to apply to the synthetic dataset, thereby obviating the need to re-label the synthetic dataset.

In operation block 414, the centralized site/device 406 may train the neural network using the acquired (or adjusted) training data. For example, the centralized site/device 406 may cause the neural network to process a task for which an expected/desired output is known, compare the outputs/activations generated by each layer the neural network to the expected/desired outputs, determine the values of the weights in each layer based on the results of the comparison, and generate a trained neural network based on the determined weight values.

In operation 416, the centralized site/device 406 may send the trained neural network to the new edge device 404. In some embodiments, the centralized site/device 406 may also send the edge device 404 the results of the synthesis function and/or a parameter that identifies a subset of data (e.g., activations, inference results, etc.) that is to be stored or used by the edge device 404. In some embodiments, the centralized site/device 406 may be configured to determine the parameter based on the synthesis function results (generated in operation block 412).

In operation block 418, the edge device 404 may receive and execute the trained neural network. For example, a processor in the edge device 404 may execute a software application program corresponding to the received neural network to perform inference. As mentioned above, inference may include traversing the processing nodes in the received neural network along a forward path to produce one or more values as an overall inference result.

In operation block 420, the edge device 404 may generate and store the collected datasets and the associated inference results (or any other associated output) in memory. In some embodiments, the edge device 404 may store all of the collected datasets and the associated inference results in memory. In some embodiments, the edge device 404 may store a subset of the collected datasets and the associated inference results in memory. The contents of the subset may have been defined as a parameter received from the centralized site/device 406 (e.g., as part of the operations 416 or 418) and/or may have been pre-loaded before deployment. The determination of which collected data to be stored may be made based on the results of the synthesis function applied/executed in operation block 412. One example of this would be where datasets are stored more frequently for sensor measurements that relate to the most heavily synthesized data. For example, for a hyperspectral sensor on an edge device 402, the neural network may be designed to detect elevated levels of certain atmospheric gases. If the training data synthesized in operation block 412 was very heavily modified from its input state in the bands that detect carbon dioxide, and if it is known that the hyperspectral sensor on the edge device 402 images active volcanic zones where carbon dioxide would be expected to be elevated, then the collected dataset and associated inference results for these geographical zones would be stored with higher priority and/or at higher frequency. This facilitates the collection of relevant data for neural network retraining where previously (e.g., in operation block 414, etc.) only heavily synthesized data was available.

Similarly, for biomedical AI deployments, synthetic data may be generated via a second trained network (e.g., a Generative Adversarial Network (GAN)). After deployment, each captured image may be compared against the training dataset (e.g., via a search on a binary tree or database). In some embodiments, this comparison may be performed based on the neural activation pattern of a certain layer or layers in the network. The runtime activation pattern of these layers may be compared against a stored runtime activation pattern database for the training dataset, calculated during training. This neural activation pattern comparison may allow the device to determine whether the runtime image on which inference is performed is more closely related to a synthetic or non-synthetic training image. Images that are more closely related in terms of their neural activation patterns to synthetically generated training data may be given a higher priority for communicating back to the centralized site/device 406 to be used in retraining. By using the neuron activation pattern to compare against the training activation patterns, the data captured by the edge device 402, 404 may be prioritized in accordance with its importance for downlink and retraining, to produce an overall more appropriate/accurate retrained neural network on the edge device 404.

In operation 422, the centralized site/device 406 may receive collected datasets and/or an overall inference result from the new edge device 404. In operation block 424, the centralized site/device 406 may update the neural network based on the collected datasets and the model performance on them (i.e., the overall inference result). For example, the centralized site/device 406 may generate an updated neural network in operation block 424 by using the datasets and inference results received from the new edge device 404 to retrain the neural network (originally trained in operation block 414). In operation 426, the centralized site/device 406 may send the updated neural network information (an updated neural network, updated models, updated weights, etc.) to the edge device 404.

In operation block 428, the edge device 404 may use the information received from the centralized site/device 406 (e.g., portions of the updated neural network, updated models, updated weights, etc.) to update the previously-received neural network (received in operation block 418) and execute the updated neural network. Alternatively, in operation block 428, the edge device 404 may execute an updated neural network received from the centralized site/device 406 in operation 426.

Any or all of the operations in method 400 (e.g., operations 416-428, etc.) may be performed repeatedly as needed (e.g., until a desired level of accuracy or precision is achieved, etc.). Repeating the operations above may enable the neural network to be continuously updated to improve its accuracy, as sensor data with increasing richness and variation is captured at the edge device 404. This may be particularly important for a deployed edge device 402 that is sensing some parameter of a mechanical part (e.g., the vibration of a motor). Over the device's lifetime, the vibration will increase due to wear and tear, and feeding this sensed data back to the centralized site/device 406 for re-training the neural network may enable a more accurate neural network to be deployed to the edge device 404 to account for aging/wearing parts.

As mentioned above, edge devices (e.g., edge devices 110, 402, 404, etc.) may be resource-constrained devices that have limited bandwidth resources. Some embodiments may include edge devices that implement or use narrowband channels or other narrow band communication technologies. A key issue with narrow band communications is the updating of the parameters of the edge device (e.g., the neural network, the network architecture and associated weights, etc.), which may range in size from being very small (e.g., kilobytes of data) to very large (e.g., megabytes or more of data). This may be a limiting factor in systems in which the desire is to be able to time-share an edge device containing sensors for multiple different tasks and/or in which the inference tasks are not necessarily fully known a priori. The technical challenge is particularly severe in the case of space-based systems in which planning and deployment cycles could range from years to decades and each mission could last decades (as is the case with NASA Voyager craft, etc.). The embodiments include methods (e.g., method 500 discussed below, etc.) that overcome these and other technical challenges.

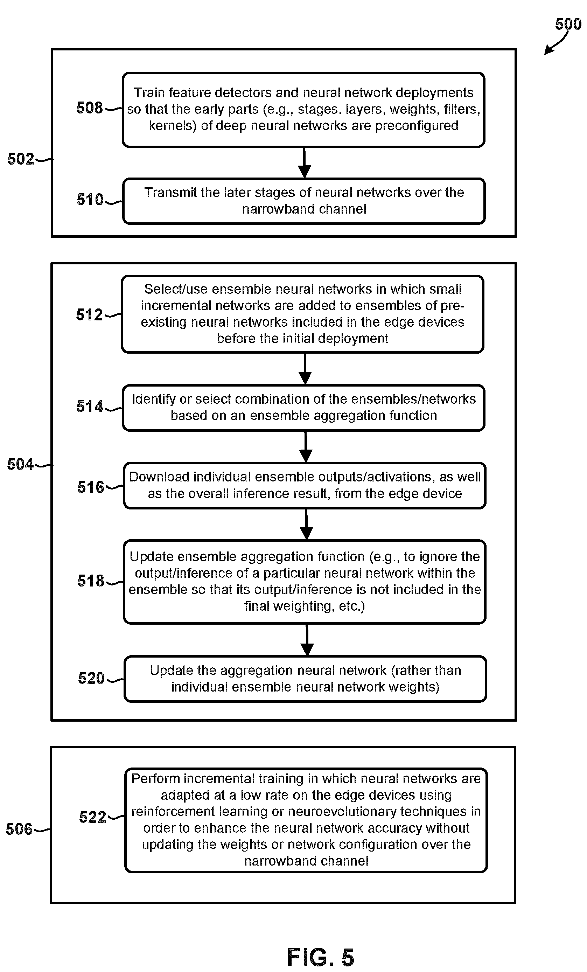

FIG. 5 illustrates a method 500 for improving or updating functionality on devices (e.g., edge devices, etc.) that use narrowband channels, that are deployed in applications that could not necessarily have been fully understood or predicted at the outset of deployment, and/or which could be deployed for projects that last years or decades. All or portions of method 500 may be performed by one or more processors in one or more devices (e.g., centralized site/device, server computing device, edge device, etc.). The functionality of the device may be improved or updated by performing any combination of any of the operations in any or all of blocks 502-522, including the operations in any one of blocks 502, 504 or 506.

In block 508, a device processor (e.g., a processor in a centralized site/device, etc.) may train feature detectors and neural network deployments so that the early parts (e.g., stages, layers, weights, filters, kernels, etc.) of a deep neural network are preconfigured. In block 510, the device processor may transmit the later stages of the neural network over the narrowband channel. By only transmitting the later stages, the device processor may reduce the required bandwidth of the edge device and/or allow the edge device to generate or use updated neural networks via narrowband channels.

In block 512, the device processor may select or use an ensemble neural network in which small incremental networks are added to ensembles of pre-existing neural networks in edge devices sent before initial deployment, or where only the combination of the ensemble neural networks that produce a final output (e.g., the overall inference result) are updated.

In block 514, the device processor may identify or select a combination of ensembles (e.g., neural networks, sub-networks, etc.) based on an ensemble aggregation function. The ensemble aggregation function may be a weighting function that weights the outputs/activations of the layers in the neural networks or the overall inference result of the neural networks in the ensemble neural network to determine the final training or ensemble output (e.g., results of backpropagating through the network during training, the overall inference result of the ensemble neural network, etc.).

In block 516, the device processor may receive the overall inference result of the ensemble neural network and the individual ensemble outputs (e.g., the overall inference result of each neural network in the ensemble neural network) from the edge device.

In block 518, the device processor may update (via modification, training, etc.) the ensemble aggregation function based on the individual ensemble outputs and/or the overall inference result, without necessarily requiring any neural network weight updates.

In block 520, the device may update only the ensemble neural network or aggregation neural network (i.e., rather than individual ensemble neural network weights).

Updating only the aggregation neural network (as opposed to updating the individual weights) may result in less data being sent to the edge device. For example, the aggregation function may be modified to ignore the output/inference of a particular neural network within the ensemble neural network so that its output/inference is not included in the final weighting.

In block 522, the device may perform incremental training in which neural networks are adapted at a low rate on the edge devices using reinforcement learning or neuroevolutionary techniques in order to enhance the neural network accuracy without updating the weights or network configuration over the narrowband channel.

The various embodiments may generate (via one more processor in the system) a result that includes an updated neural network with low uplink bandwidth requirements. In some embodiments, this may be accomplished by enabling reconfiguration of interconnectivity of pre-loaded sets of neural networks - local updating rather than ground uplinking (e.g., sending or uploading data from the centralized site/device to the edge device, etc.).

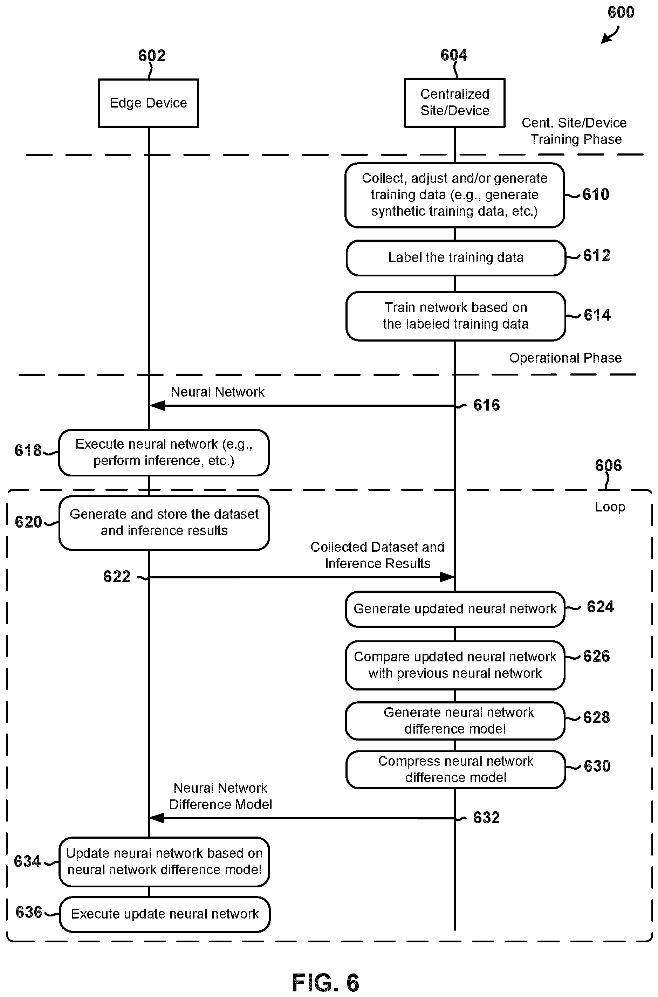

FIG. 6 illustrates a method 600 for generating and using a neural network difference model in accordance with some embodiments. In particular, FIG. 6 illustrates a neural network executing on an edge device 602 with only a low-bandwidth uplink (receive) capability, and which has been updated without re-transmitting an entire neural network from a centralized site/device 604 to the edge device 602.

The operations 610-636 of method 600 may be performed in phases. For example, operations 610-614 may be performed during a centralized site/device training phase, and operations 616-636 may be performed during an operation phase. Operations 620-636 may be performed repeatedly in a loop 606 as needed (e.g., until a desired level of accuracy or precision is achieved, etc.).

In operation block 610, the centralized site/device 604 may receive or collect training data from existing edge devices and/or synthetically generate training data. In operation block 612, the centralized site/device 604 may label the training data. In operation block 614, the centralized site/device 604 may train a neural network solution on the labelled data. In operation 616, the centralized site/device 604 may send the neural network to the edge device 602.

In operation block 618, the edge device 602 may receive and execute the neural network (e.g., by performing inference, etc.). In operation block 620, the edge device 602 may generate and store the collected datasets and the associated inference results. For example, the edge device 602 may collect data from its sensors, apply the collected data to the layers in the received neural network to generate an overall inference result, and store the collected data and the overall inference result in memory. In some embodiments, the edge device 602 may be configured to store the outputs/activations between layers in a memory of the edge device 602. In operation 622, the edge device 602 may send (or downlink, etc.) part or all of the collected datasets and the associated inference results to the centralized site/device 604.

In operation block 624, the centralized site/device 604 may receive and use the collected datasets and the associated inference results to update the neural network (received as part of operations 616, 618). In some embodiments, the centralized site/device 604 may be configured to only update part of the neural network. In some embodiments, the centralized site/device 604 may determine the parts of the neural network that are to be updated based on the extent to which they differ from the original neural network. In operation block 626, the centralized site/device 604 may compare the updated neural network against the original or previous neural network (e.g., network generated or trained as part of operation block 614). In operation block 628, the centralized site/device 604 may generate a neural network difference model. In operation block 630, the centralized site/device 604 may compress the generated neural network difference model. In operation 632, the centralized site/device 604 may send the neural network difference model to the edge device 602.

In operation block 634, the edge device 602 may receive and decompress (if needed) the neural network difference model, and update the neural network based on the received neural network difference model. In operation block 636, the edge device 602 may execute the updated neural network.

In some embodiments, the edge device 602 may be configured to perform the neural network update operations (e.g., the operations performed in operation blocks 620-636) repeatedly as needed (e.g., until a desired level of accuracy or precision is achieved, etc.). For example, the neural network update operations may be performed repeatedly at regular intervals or at points determined by environmental or operational parameters (e.g., for a mobile robot, when it moves from an indoor location to an outdoor location, or for a satellite-integrated edge device, when it is interested in land features and it is currently over the sea). These operations may also be performed repeatedly at points determined based on the overall inference result.

For example, if the network is found to be operating near to or outside of its training envelope, then the neural network update operations may be repeated in order to update the neural network with a new training envelope. The operation of the neural network outside of its training envelope may be detected by runtime (e.g., on the edge device 602) analysis of the neural activation pattern(s) of the network as inference is performed. A local comparison of the neural activation pattern(s) against a database of such patterns recorded during training may indicate that the neural network is operating close to or outside of its training envelope. The input data that caused these unusual neural activation patterns may be sent to the centralized site/device 604 to aid with optimum re-training of the neural network. For example, in a retinal imaging application that is aiming to aid with the diagnosis of diabetic retinopathy, if new subjects are imaged with different ethnicities than those used for training the neural network, then the neural network may be operating outside its dependable operational envelope. Using neural activation patterns this can be detected and a retraining cycle initiated at the centralized site/device, with subsequent neural network update.

In method 600 described above, the neural network architecture is previously defined and not altered as part of the re-training or update operations (e.g., in operation blocks 624, 634, etc.). The final neural network, after updating the edge device 602, has the same architecture as the original neural network executed in operation block 618. Only the weights are altered as part of the update (e.g., in operation block 634, etc.).

The baseline for this technique (e.g., updating a neural network based on a neural network difference model) is based on patches. In this case, after re-training with the new data in the centralized site/device 604, a patch may be generated between the original neural network and the retrained neural network. The patch may record all the differences (e.g., at a byte level) between the original and new neural networks. The patch may then be transferred to the edge device 602 whereupon it is applied to the neural network already on the edge device 602 in order to update the network to the new network.

The patch may be generated and/or applied by a number of different techniques and tools, including a layer freezing method that uses a minimum size technique, a layer freezing method that uses a minimum delta technique, a weights freezing method that uses a minimum size technique, and a weights freezing method that uses a minimum delta technique, all of which are described in detail further below.

Since the patch only contains the differences between the original and retrained neural networks (and the locations of these differences), it represents the baseline update as it is the minimal amount of data that can be transferred to the device in order to update the neural network on the edge device 602 to match the neural network on the centralized site/device 604. Some of the methods described below (e.g., layer freezing method, weights freezing method, etc.) may reduce the size of this patch. It should be noted that complete freedom while re-training the neural network on the centralized site/device 604 is not a requirement for implementing these methods.

**In** some embodiments, the centralized site/device 604 may be configured to generate the patch by performing a layer freezing method. The layer freezing method may reduce the size of the update by imposing a restriction that certain layers of the neural network cannot change during the re-training process. This restriction may be imposed by freezing a layer during training, meaning that the weights in that layer are not altered during the training process. All weight values in the frozen layer(s) after neural network retraining are exactly equal to their values in the original neural network that is already deployed on the edge device. Hence, these values will not be included in the patch, and the patch will be reduced in size from its baseline size. The effect of freezing a layer in the neural network during re-training is to reduce somewhat the flexibility of the training process, but since all weights not in frozen layers can still change, the neural network can compensate for this layer freezing (neural plasticity).

Thus, the centralized site/device 604 is configured to freeze one or more layers of the neural network during training in order to prevent the layers from changing during the re-training process. The centralized site/device 604 selects or determins layers to freeze by implementing or using a minimum size technique or a minimum delta technique. The minimum size technique includes selecting or determining the layers to be frozen based on an aggregate measure of the value of the weights in a layer. The minimum delta technique includes selecting or determining the layers to be frozen based on a measure of the aggregate changes in the weight values, as determined by comparing the layer weight values before and after a re-training cycle.

For example, in some embodiments, the centralized site/device 604 may be configured to perform a layer freezing method based on a minimum size technique, which may include the centralized site/device 604 training the original neural network, sending the original neural network to the edge device 602 and deploying the edge device 602, acquiring new data on which to additionally train or re-train the neural network in the centralized site/device 604, using the newly acquired data to analyze the original neural network layer-by-layer, using a result of the analysis to rank the layers in ascending order of values (e.g., according to an aggregate layer metric, etc.), and determining the layers to freeze based on the ranks. In some embodiments, the centralized site/device 604 may also optionally select the top x of the layers from the ranked or ordered list (with x possibly based on a user specification for the desired maximum patch size or a desired accuracy reduction). The centralized site/device 604 may retrain the neural network and freeze the determined/selected layers. The retraining may be performed incrementally by freezing one additional layer at each re-training cycle or by freezing all selected layers initially and then completing re-training. After the centralized site/device 604 completes the re-training operations, it may compare the retrained neural network against the original neural network, and generate the patch based on the results of the comparison. The centralized site/device 604 may optionally compress the patch and deploy the patch to the edge device 602. The edge device 602 may decompress the patch (if required) and apply the patch to the neural network to generate the updated neural network.

**In** some embodiments the centralized site/device 604 may be configured to perform a layer freezing method based on a minimum delta technique, which may include the centralized site/device 604 training the original neural network, sending the original neural network to the edge device 602 and deploying the edge device 602, acquiring new data on which to additionally train or re-train the neural network, using the acquired new data to perform the additional training or re-training without freezing any layers, analyzing the retrained neural network layer-by-layer, using the result of the analysis to rank the layers in ascending order of entropy (e.g., according to an aggregate layer metric, etc.) that measures the amount of change within the weights of a layer between the original neural network and the retrained neural network, select the top x of the layers from the ranked or ordered list (with x possibly based on a user specification for the desired maximum patch size or the desired accuracy reduction), and retraining the original neural network (either incrementally by freezing one additional layer at each re-training cycle or by freezing all selected layers initially and then completing re-training). After the completion of re-training, the centralized site/device 604 may compare the retrained neural network against the original neural network, and generate the patch based on the results of the comparison (e.g., based on the difference between the retrained neural network and the original neural network, etc.). The centralized site/device 604 may optionally compress the patch, and deploy the patch to the edge device 602. The edge device 602 may decompress the patch (if needed) and apply the patch to the neural network to generate the updated neural network.

In the embodiments in which the centralized site/device 604 performs a layer freezing method that is based on the minimum size technique, the centralized site/device 604 selects or determines the layers to be frozen based on an aggregate measure of the value of the weights in the layer. Layers with small aggregated values are more likely to have less of an impact on the discrimination power of the network than layers with larger aggregated values. Prior to re-training, the centralized site/device 604 may identify for freezing the layer or layers with the smallest aggregated values. During retraining, the centralized site/device 604 may freeze the identified layers. Since the patch only captures the changes between the original neural network and the retrained neural network, the weights in the frozen layer(s) are not included in the patch, reducing its size.

In the embodiments in which the centralized site/device 604 performs a layer freezing method that is based on the minimum delta technique, the centralized site/device 604 selects or determines the layers to be frozen based on a measure of the aggregate changes in the weight values as determined by comparing the layer weight values before and after the re-training cycle. Layers with weights whose values change the least during re-training contribute least to capturing the knowledge contained in the new data involved in the re-training, and are likely to be least important to updating the network based on the new training data. The minimum delta technique may include two re-training steps: the output network from the first retraining is compared against the original network, and the layer(s) that have changed the least (e.g., according to some aggregate metric) in the comparison are identified. The retraining is then repeated but with the identified layer(s) frozen, in order to generate the final neural network and weights. Since the patch only captures the changes between the original neural network and the retrained neural network, the weights in the frozen layer(s) are not included in the patch, thereby reducing the patch size.

In some embodiments, the centralized site/device 604 may be configured to determine the number of layers to freeze based on user input. Either of two user inputs, or a combination of them both, may be used to determine the specific layers to freeze. The first user input may be a maximum update size, i.e., the maximum size of the patch to be transmitted to the edge device 602. The second user input may be the maximum reduction in accuracy (measured by a network performance accuracy metric) in the network performance. In both cases, an initial re-training phase may be required in order to determine the patch size and accuracy when no layers are frozen. In the embodiments in which the centralized site/device 604 implements the minimum delta technique, re-training is performed to determine the layer weight changes, and therefore extra re-training is not required. In the case of the first user input (maximum update size), the centralized site/device 604 may repeat the retraining operations, with sufficient layers chosen from an ascending list of smallest magnitude layers (for minimum size technique) or from an ascending list of least dynamic layers (for minimum delta technique) to freeze x% of the weights, where x is the difference (for minimum size technique) or the percentage difference (for minimum delta technique) between the original patch size and the user specified maximum patch size).

Layer freezing may be done in stages or all at once. In the case of the second user input (maximum reduction in accuracy), the centralized site/device 604 may perform the training operations in stages, where the next layer in the list of ascending layers is frozen at each stage, until the loss in accuracy exceeds the user specified maximum reduction in accuracy. The centralized site/device 604 may select the second to last network as the solution for which the patch is generated.

In some embodiments, the centralized site/device 604 may be configured to generate the patch by performing a weights freezing method. The weights freezing method may be similar to the layer freezing method discussed above, except individual weights are frozen instead of complete layers. Also, instead of aggregating the size/change at the layer level (as is done when performing layer freezing method), a centralized site/device 604 that performs the weights freezing method may rank the weight changes on a per-weight basis. Similar to the layer freezing method discussed above, the weights freezing method may include the centralized site/device 604 selecting the weights to be frozen from the ascending list of weights based on user inputs for maximum desired uplink size and/or maximum allowed accuracy reduction.

Thus, in some embodiments, the centralized site/device 604 may be configured to freeze one or more weights in one or more layers of the neural network during training in order to prevent the weights from changing during the re-training process. The centralized site/device 604 may select or determine weights to freeze by implementing or using a minimum size technique or a minimum delta technique. The minimum size technique may include ranking, selecting or determining the weights to be frozen based on an aggregate measure of weight size. The minimum delta technique may include ranking, selecting or determining the weights to be frozen based on a measure of the magnitude of changes in the weights before and after re-training.

For example, in some embodiments the centralized site/device 604 may be configured to perform a weights freezing method based on a minimum size technique, which may include the centralized site/device 604 training the original neural network, sending the original neural network to the edge device 602 and deploying the edge device 602, acquiring new data on which to additionally train or re-train the neural network in the centralized site/device 604, analyzing the original neural network weight-by-weight to rank the weights in ascending order of size (e.g., according to an aggregate weight size metric, etc.), and selecting the top x of the weights from the ordered list (with x possibly based on a user specification for the desired maximum patch size or the desired accuracy reduction). The centralized site/device 604 may train or retrain the neural network and freeze the determined/selected weights. The retraining may be performed incrementally by freezing groups of weights (e.g. within a layer) and performing a re-training cycle, or by freezing all selected weights initially and then completing re-training. After the centralized site/device 604 completes the re-training cycle/operations, it may compare the re-retrained neural network against the original neural network, and use the result of the comparison to generate the patch. The centralized site/device 604 may optionally compress the patch and deploy the patch to the edge device 602. The edge device 602 may decompress the patch (if required) and apply the patch to the neural network to generate the updated neural network.

In some embodiments the centralized site/device 604 may be configured to perform a weights freezing method based on a minimum delta technique, which may include the centralized site/device 604 training the original neural network, sending the original neural network to the edge device 602 and deploying the edge device 602, acquiring new data on which to additionally train or re-train the neural network in the centralized site/device 604, performing additional training or re-training without any weights freezing (i.e., without restricting or freezing any of the weights), analyzing the retrained neural network weight-by-weight to rank the weights in ascending order of the magnitude of their change before and after re-training, according to some change metric, and optionally select the top x% of the weights from the ordered list (with x possibly based on a user specification for the desired maximum patch size or the desired accuracy reduction). The centralized site/device 604 may train or retrain the neural network and freeze the determined/selected weights. The training may be performed incrementally by freezing groups of weights (e.g. within a layer) and performing a re-training cycle, or by freezing all selected weights initially and then completing re-training. After the centralized site/device 604 completes the re-training cycle/operations, it may compare the re-retrained neural network against the original neural network, and use the result of the comparison to generate the patch. The centralized site/device 604 may optionally compress the patch and deploy the patch to the edge device 602. The edge device 602 may decompress the patch (if required) and apply the patch to the neural network to generate the updated neural network.

For all of the above methods, training and freezing may be performed incrementally, in a similar manner to the process for iterative network pruning.

In addition to the techniques discussed above, in the various embodiments, the centralized site/device 604 could be configured to implement or use other techniques (e.g., network pruning based techniques) to identify the most appropriate layers/weights to freeze during the training cycles for generating efficient network updates. Examples of such techniques include L1/L2 norm of weights/layers metrics, metrics on the mean activations of neurons, and metrics on the number of times a neuron was 0.

In some cases, the original neural network deployed on the edge device 602 may have already been optimized by, e.g., pruning techniques.

In some embodiments, the centralized site/device 604 may be configured to implement or use knowledge distillation techniques during the re-training process.

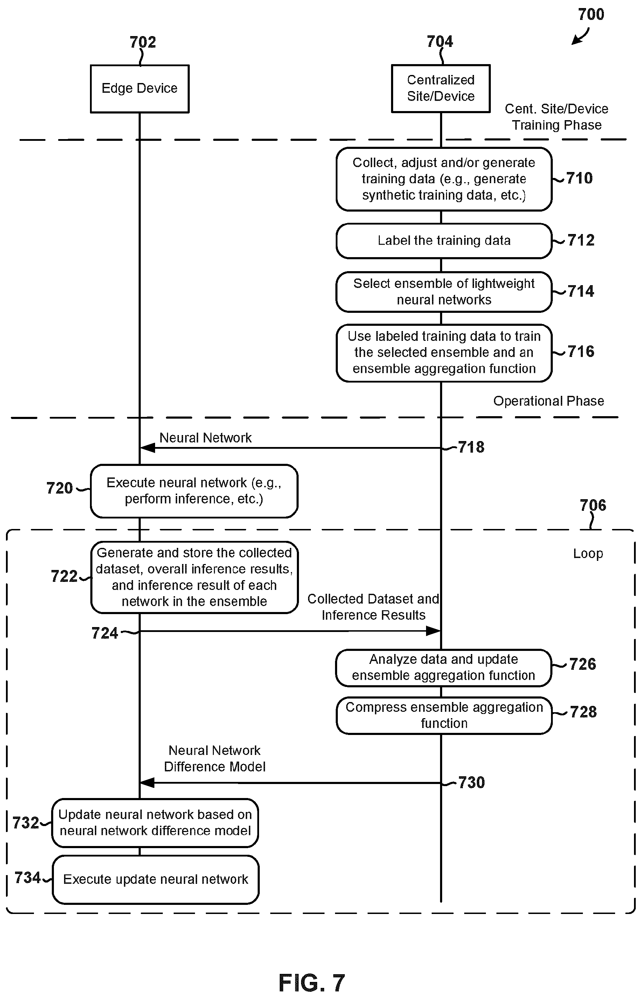

FIG. 7 illustrates a method 700 for generating and using a neural network difference model in accordance with another embodiment. In particular, FIG. 7 illustrates an embodiment in which a neural network executing on an edge device 702 has been updated without re-transmitting an entire neural network from a centralized site/device 704 to the edge device 702.

The operations 710-734 of method 700 may be performed in phases. For example, operations 710-716 may be performed during a centralized site/device training phase, and operations 718-734 may be performed during an operation phase. Operations 722-734 may be performed repeatedly in a loop 706 as needed (e.g., until a desired level of accuracy or precision is achieved, etc.).

In operation block 710, the centralized site/device 704 may collect training data from existing edge devices and/or synthetically generate training data. In operation block 712, the centralized site/device 704 may label the training data. In operation block 714, the centralized site/device 704 may select an ensemble of lightweight neural networks, and generate an ensemble (e.g., ensemble neural network, ensemble classifier, etc.) based on the neural networks. This may be done for one or more categories of target applications.

For example, the centralized site/device 704 may generate an ensemble classifier in operation block 714 based on the selected ensemble of lightweight neural networks. Each selected network may correspond to a binary classifier. The outputs of the binary classifiers may be combined to produce a non-binary output.

In an autonomous driving application example, the centralized site/device 704 may generate an ensemble classifier that includes different pedestrian detection classifiers for different conditions. That is, different classifiers may be used for pedestrian detection from video data in different environmental conditions (e.g., one for detection in fog, another for detection in strong sunlight, another for detection in low-light, another for detection in rainy conditions). Together, this ensemble of classifiers may enable pedestrian detection across a number of environmental conditions.

In another example, an edge device on a satellite that detects ships may have an ensemble in which a first neural network (or classifier, etc.) is an object detector for boats, and a second neural network in the ensemble is a wake detector. Together these neural networks (i.e., the object detector and the wake detector) may perform better than either neural network alone. The weighting in the aggregation function for the wake detector may be less for smaller boats or stationary ships.

In operation block 716, the centralized site/device 704 may train the ensemble of neural networks and an ensemble aggregation function on the labelled data. In operation 718, the centralized site/device 704 may send the ensemble neural network and the ensemble aggregation function to the edge device 702.

In operation block 720, the edge device 702 may execute the ensemble neural network. In operation block 722, the edge device 702 may generate and store the collected datasets and the associated ensemble inference result (e.g., the results/activations from each network in the ensemble, the overall inference result, etc.) in memory.

In operation 724, the edge device 702 may send (or downlink, etc.) some or all of the collected datasets, the associated ensemble inference result, and the outputs/activations from each network in the ensemble neural network to the centralized site/device 704. In some embodiments, as part of operation 724, the edge device 702 may send all or a subset of the raw data (e.g., data collected from sensors, etc.) to the centralized site/device 704.

In operation block 726, the centralized site/device 704 may analyze the received data and update the ensemble aggregation function based on the analysis. For example, the centralized site/device 704 may analyze the outputs/activations from each network in the ensemble neural network against data acquired from other devices and/or via other methods. In an example in which the edge device is included in a constellation of cubesat satellites, data received from all cubesats in the constellation may be aggregated and used in the analysis at the centralized site/device 704. The centralized site/device 704 may use the analysis results to determine whether another network should be added to the ensemble neural network. The centralized site/device 704 may train the ensemble neural network and send it to the edge device 702 as an additional neural network in the ensemble neural network, with associated aggregation weights.

In some embodiments, some or all of the operations in operation block 726 may alternatively be performed directly on the edge device 702. In these embodiments, the neural network may be updated based on criteria available to the edge device (e.g., provided in a separate uplink, etc.). One example would be the automatic adjustment of the weighting between ensemble neural networks (or their sub-networks) based on the time of year. For example, the edge device 702 could alter the ensemble weighting in an ensemble neural network that is designed to detect forestation/deforestation between the different seasons to account for leaf-loss in deciduous forests.

As a further example, additional classifiers or additional neural networks could be added to the ensemble on the edge device 702 to provide the ensemble or edge device 702 with added functionality. For example, an edge device 702 on a mobile robot that enables autonomous navigation via an ensemble may be updated by adding a classifier or neural network to classify traffic signs, in order to improve outdoor navigation. The ensemble may alternatively still be used to make a binary decision, as an ensemble consensus. The ensemble may also be used as an unknown object classifier, whereby an inability to classify, or classification with a marginal confidence, triggers sending the entire raw dataset for that classifier as part of operation 724. In this way only data for which the classifier cannot produce a positive result is sent for assessment in operation 724.

In order to update the edge device, a new classifier can be added to the ensemble in operation block 726 that adds to the consensus to produce a more desirable output result. In an alternative embodiment the ensemble may be used for verification purposes, where agreement/disagreement between edge devices 702 indicates a relative confidence in the obtained result.

In operation block 728, the centralized site/device 704 may compress the ensemble aggregation function. In operation 730, the centralized site/device 704 may send the ensemble aggregation function to the edge device 702.

In operation block 732, the edge device 702 may receive and decompress the new aggregation function (if needed), and update the ensemble neural network with the new aggregation function. In operation block 734, the edge device 702 may execute the updated ensemble neural network.

Some embodiments may enable a neural network to be continuously updated with efficient bandwidth usage by addressing the problem of low-bandwidth uplink and the inability or difficulty in multi-purposing a single edge device or resource.

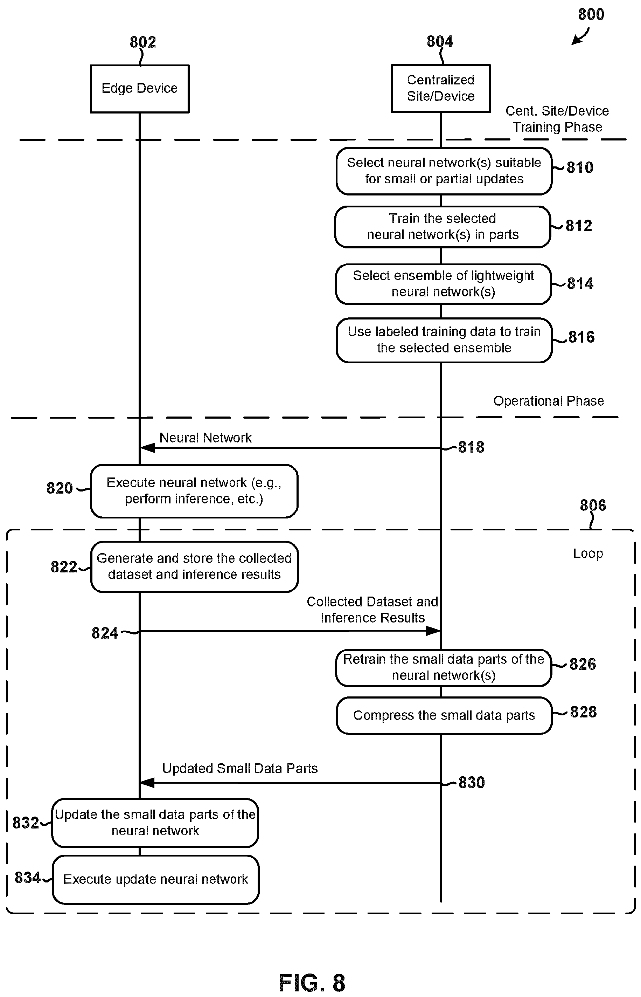

FIG. 8 illustrates a method 800 for updating parts of a neural network in accordance with an embodiment. In particular, FIG. 8 illustrates an alternative embodiment of a neural network executing on an edge device 804 with only a low-bandwidth uplink capability, which has been updated without re-transmitting an entire neural network from a centralized site/device 806 to the edge device 804.

The operations 810-834 of method 800 may be performed in phases. For example, operations 810-816 may be performed during a centralized site/device training phase, and operations 818-834 may be performed during an operation phase. Operations 822-834 may be performed repeatedly in a loop 806 as needed (e.g., until a desired level of accuracy or precision is achieved, etc.).

In operation block 810, the centralized site/device 804 may select, generate or design a neural network that facilitates small uplink neural network updates. This may be a stratified neural network with (a) large data volume parts of the neural network and/or (b) small data parts of the neural network. For example, the large data volume parts may be feature identification layers, and the small data parts may be fully connected layers, in which case only the fully connected layers are updated. In another example, the large data volume parts may be of higher numerical precision, and the small data parts may be of lower numerical precision. In another example, the large data volume parts may contain multiple partial layers that are not cross-connected (partitioned), and the small data parts may contain the cross-connected weights between the partial layers in the large data volume parts.

In operation block 812, the centralized site/device 804 may train the large data volume parts of the neural network (e.g., feature identification layers, higher numerical precision, multiple partial layers that are not partitioned or cross-connected, etc.) on data from similar sensors (e.g., sensors that are the exact same as the one being deployed, but which have been deployed in different environments). The centralized site/device 804 may also train the small data parts of the neural network (e.g., fully connected layers, lower numerical precision, cross-connected weights between partial layers, etc.) on data collected from similar or related sensors (e.g., data from similar deployment environments but not necessarily from similar sensors, etc.).

Often the large data volume parts and the small data parts of the neural network perform or provide different functions within the neural network. For example, the large data volume parts may be used for feature extraction, and the small data parts may be used for classification based on the extracted features. An example is ship detection using a new edge device onboard a satellite. The large data volume parts of the neural network may be primarily for feature extraction, and therefore these neural network parts should be trained specifically for the image sensor. The small data of the neural network may form the classification part of the network, and these parts may benefit more from being trained with data from other ship detection deployments (which use alternative sensors).

In operation block 814, the centralized site/device 804 may select an ensemble of lightweight neural networks. In operation block 816, the centralized site/device 804 may train the entire neural network based on the labelled training data. In operation 818, the centralized site/device 804 may send the neural network to the edge device 804. At this stage the edge device 804 may or may not be deployed.

In operation block 820, the edge device 804 may receive and execute the neural network. In operation block 822, the edge device 804 may generate and store the collected datasets and the associated inference result in memory. In operation 824, the edge device 804 may send the collected datasets and the associated inference result to the centralized site/device 804.

In operation block 826, the centralized site/device 804 may receive the collected datasets and the associated inference result from the edge device 802, and use the received data to retrain only small data parts of the neural network. In operation block 828, the centralized site/device 804 may compress the small data parts of the neural network. In operation 830, the centralized site/device 804 may send the updated small data parts of neural network parts to the edge device.

In operation block 832, the edge device 804 may receive, optionally decompress, and use the updated small data parts to update the small data parts of the neural network. In operation block 834, the edge device 804 may execute the updated neural network.

The various embodiments may enable a neural network to be updated on one or more edge devices without requiring any transmission of neural network data between the edge devices and the centralized site/device. This addresses the problems of low bandwidth uplink and variation in sensor performance and/or characteristics.

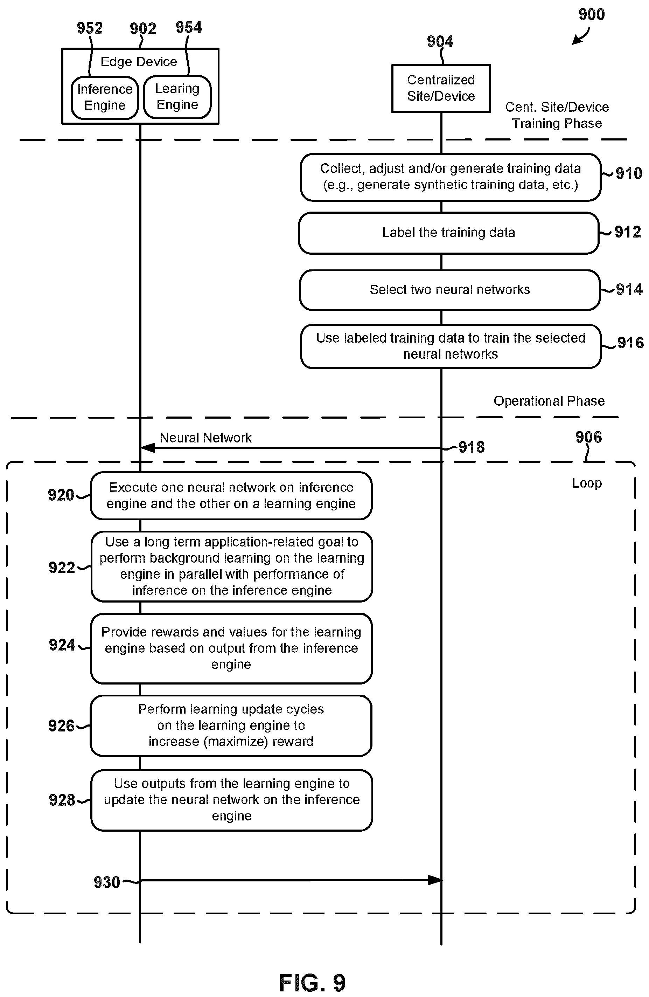

FIG. 9 illustrates a method 900 for updating a neural network on one or more edge devices without requiring transmission of neural network data in accordance with an embodiment. In the example illustrated in FIG. 9, method 900 is performed in a system that includes an edge device 902 and a centralized site/device 904. The edge device 902 may include an inference engine 952 and a learning engine 954. In some embodiments, the learning engine 954 may be a training engine that is configured to use a collected dataset and/or inference results to determine the values of the weights in the layers of a neural engine.

The operations 910-930 of method 900 may be performed in phases. For example, operations 910-916 may be performed during a centralized site/device training phase, and operations 918-930 may be performed during an operation phase. Operations 920-930 may be performed repeatedly in a loop 906 as needed (e.g., until a desired level of accuracy or precision is achieved, etc.).

In operation block 910, a centralized site/device 904 may collect training data from existing edge devices and/or synthetically generate training data. In operation block 912, the centralized site/device 904 may label the training data (e.g., using human-in-the-loop labelling). In operation block 914, the centralized site/device 904 may select two (or more) neural networks for training. The selected neural networks may be the same as each other or may differ from one another. In operation block 916, the centralized site/device 904 may use the labelled training data to train the selected networks. In operation block 918, the centralized site/device 904 may send the trained neural networks to the edge device 902.

In operation block 920, the edge device 902 may execute one neural network on the inference engine 952, and the other neural network on the learning engine 954. This may be enabled by, for example, the use of neuromorphic computing in which the neural network inputs are fed to both the inference engine 952 on the edge device 902 and to the learning engine 954 (neuromorphic engine) on the edge device 902. In this hybrid neural network, the inference engine 952 may implement a Convolutional Neural Network (CNN), and the learning engine 954 (neuromorphic engine) may implement a Spiking Neural Network (SNN). The SNN may be configured and/or assigned to performing background learning. Generally, background learning updates a neural network over a relatively long period of time (e.g., compared to inference time), and does this in the background, e.g., only when resources are available. It has a low priority relative to inference. Additionally, background learning may operate over long periods of time so as to update the neural network for long term trends rather than short-term or sporadic variations. SNNs and neuromorphic engines have the benefit of being very low power, enabling long-term on-device retraining on the edge device 902.

In operation block 922, the edge device 902 may use a goal (e.g., a long-term application related goal, etc.) to perform background learning on the learning engine 954 concurrent or in parallel with performing neural network inference on the inference engine 952. Goals may be preloaded on the edge device 902 and/or may be updated on and received from the centralized site/device 904. Sending the goal from the centralized site/device 904 the edge device 902 may allow the goal to be altered for different/new applications without requiring any hardware changes on the edge device 902. A pre-loaded goal would be set before edge device 904 is deployed, and not changed thereafter.

For example, in the case of an edge device 902 on a satellite that has the long-term goal of detecting suspicious shipping activity (e.g., smuggling, illegal fishing, etc.), the inference engine 952 may be detecting and classifying ships from image sensor data. At the same time, the edge device 902 may have access to alternative information about the ships (e.g., Automatic Identification System (AIS) data - transponder radio data signals from ships indicating their identification and ship type, etc.). The learning engine 954 may correlate the inference result (the ship detection) with the AIS data for the ship to detect discrepancies (e.g., identification spoofing, no AIS signal, incorrect reporting of ship size), and then learn the characteristic movement signature of such ships in the background. The end result of such background learning is the ability to detect suspicious ship activity based solely on the image data.

In operation block 924, the edge device 902 may provide rewards and values for the goal-based learning engine 954 based on output from the inference engine 952. In the above example, the reward is provided when the learning engine 954 correctly predicts the suspicious ship activity, as indicated by miscorrelation between the ship detection inference result and the AIS data.

In operation block 926, the edge device 902 may perform learning update cycles on the learning engine 954 to increase or maximize the reward. The learning engine 954 may perform a training cycle for each detected ship, although in the background learning paradigm this may not occur at the time of detection.

In operation block 928, the edge device 902 may update the neural network on the inference engine 952 using the outputs of the learning engine 954. The outputs of the SNN/learning engine 954 may be loaded autonomously to the inference engine 952 for improved future inference. In this step, the learning engine 954 has updated an initial neural network, which the edge device 902 then transfers to the inference engine 952, thereby replacing the previous neural network used for inference with the updated neural network. This is all done autonomously on the edge device 902.

In the above suspicious ship detection example, the initial inference neural network (sent prior to deployment of the edge device) was a ship detector, but after loading of the learning engine's 954 neural network (subsequent to deployment and learning on the learning engine 954) the inference engine 952 can directly detect suspicious ship activity, even if the AIS information is correct.

In operation 930, the edge device 902 may send the inference result from the inference engine 952, and optionally the outputs of the learning neural network, to the centralized site/device 904.

In an embodiment, operation blocks 920-928 may optionally implement reinforcement learning on the learning engine 954, where the learning engine 954 implements a reinforcement learning algorithm, and the goals and rewards are made available to the algorithm. In an alternative embodiment, the inference and training in operation blocks 920-928 may be performed within a single neural network, where that neural network is a hybrid CNN-SNN neural network. The learning engine 954 (training engine) in operation blocks 920-928 may alternatively itself be an ensemble of SNNs, where previously described techniques may be used to update the learning engine ensemble.

The various embodiments may address the problems of variation (sensor faults, sensor variation due to manufacturing anomalies, tolerances, or wear and tear, etc.) and partial sensor failure. These embodiments may allow an edge device to be continually updated to accommodate for variation, such as for inflight sensor variations and individual dynamic sensor characteristics, sensor micro-failures, and sensor performance degradations. By updating the neural network to account for these and other variations, the neural network (and thus the system/edge device) becomes more resilient to change, and has a longer useful life.

The performance of sensors can vary over time, and taking account of this variation on the edge device may improve the quality of the data that is sent to the centralized site/device (downlinked), and potentially reduce the amount of downlink data by discarding unreliable data prior to the downlink. One example would be optical sensors, whereby the sensor lens can become partially occluded (e.g., marine growth for a submerged or semi-submerged sensor). By analyzing the inference results on the edge device over time, this occlusion may be detected and mitigated against, where the mitigation could include the removal from the transmitted raw/processed images of the pixels that have become obscured. For satellite borne optical sensor payloads, the optical elements may become misaligned over time or the lens elements may become scratched due to particle impacts. Total irradiation dosage may degrade electronic sensing components in space over time, resulting in their performance varying. A neural network operating on the edge device that is configured to detect and account (e.g., via updates to the neural network) for this variation may extend the effective useful lifetime of the sensor. For the example of an edge device mounted on a e-scooter, the neural network may be able to determine whether the image sensor from which it receives data has changed in orientation (e.g., is pointing more downward than when initially deployed due to vibration). In this case, the network could detect the orientation change and notify the centralized site/device that a neural network update may be required.

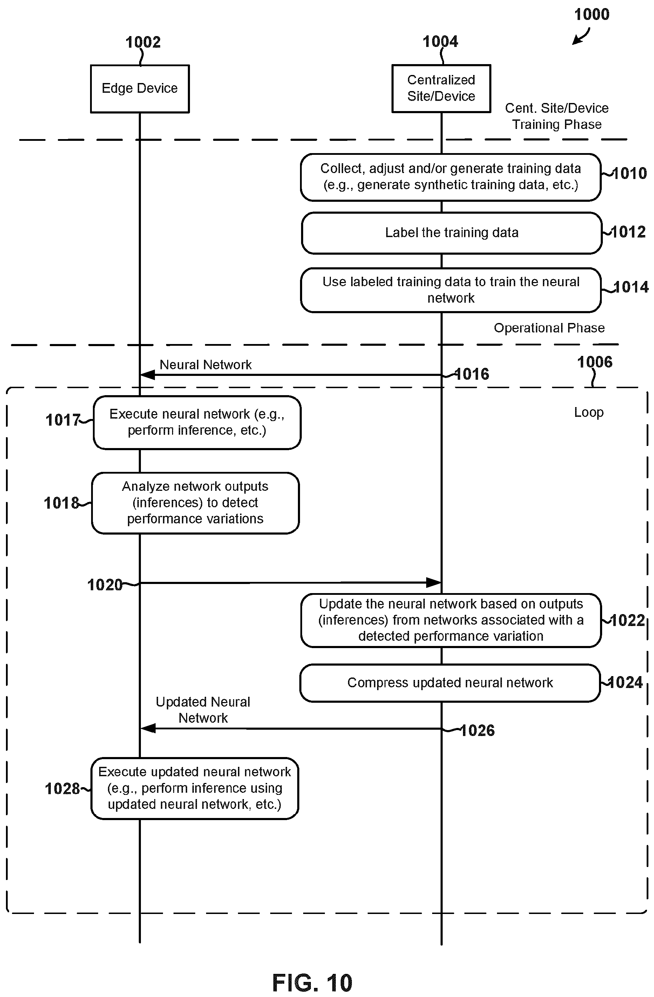

FIG. 10 illustrates a method 1000 for updating a neural network in accordance with an embodiment. In particular, FIG. 10 illustrates an edge device 1002 that is continually updated to optimally accommodate sensor variations and fault tolerance. The operations 1010-1028 of method 1000 may be performed in phases. For example, operations 1010-1014 may be performed during a centralized site/device training phase, and operations 1016-1034 may be performed during an operation phase. Operations 1017-1028 may be performed repeatedly in a loop 1006 as needed (e.g., until a desired level of accuracy or precision is achieved, etc.).

In operation block 1010, the centralized site/device 1004 may collect training data from existing edge devices and/or synthetically generate training data. In operation block 1012, the centralized site/device 1004 may label the training data. In operation block 1014, the centralized site/device 1004 may train a neural network solution on the labelled data. In operation 1016, the centralized site/device 1004 may send the neural network to the edge device.

In operation block 1017, the edge device 1002 may execute the neural network. In some embodiments, operation block 1017 may include the implementation of a Generative Adversarial Network (GAN) in order to detect sensor variation on-device.

In operation block 1018, the edge device 1002 may analyze the inference results to detect performance variations. This may involve comparing inference results over time in order to detect unexpected (e.g. statistically significant) variations or similarities (e.g., dead pixels in images), and to selectively send to the centralized site/device 1004 raw/processed data only for these detected variations.

For an edge device 1002 on an earth observation satellite, the neural network comparisons may be made only between outputs from the same time of the year (e.g., only compare summer-time outputs) or from the same geographic location (e.g. only compare Antarctic images with Antarctic images) or between outputs for images with similar hyperspectral properties (e.g., barley fields with barley fields). The analysis of the inference results in operation block 1018 may be a statistical analysis, a time-series analysis, or may be an analysis of confidence levels. For example, if over time the edge device 1002 detects objects of interest (e.g., people's faces for a face detector application) with gradually decreasing confidences, then this may indicate something has changed with the sensor or its setup or configuration.

Operation block 1018 may optionally include or enable the sharing of inference results between similar deployed edge devices (direct communication between edge devices, e.g., between satellites in a constellation). In these embodiments, each edge device 1002 may be configured to compare its inference result for the same or similar input data against the outputs of the similar devices. If any edge device 1002 is producing outputs that are determined to be significantly different to the other devices, it could send more data to the centralized site/device 1004 in operation 1020. This comparison could similarly be done at the centralized site/device 1004, which accumulates data from multiple edge devices 1002 and analyses it to detect anomalies. If anomalies are detected for one or more edge devices, the centralized site/device 1004 can request additional data from these edge devices, and can ultimately re-train neural networks specifically for these devices in operation block 1022 and send the resulting neural networks in operation block 1026 to the edge device 1002. An example in the e-scooter domain is where edge devices are deployed across a fleet of position-aware (e.g., via a satellite-based positioning system such as GPS or Galileo) e-scooters. The purpose of the edge device 1002 may be to detect when the scooter is transiting through crowded areas by using a neural network (or another AI model) applied to vision sensor data. The centralized site/device 1004 collects the crowded detection inference result and the scooter location for each scooter. If an analysis shows that two scooters at the same location at the same time detected significantly different numbers of pedestrians, the centralized site/device 1004 may request addition data from the under-reporting scooter and either retrain or flag maintenance for that scooter. The underreporting may be due to image sensor variation (e.g., its orientation has pitched forwards and it no longer has sufficient field of view of the scene ahead of it to detect all but the closest pedestrians), or it may be due to obscuration of the lens (e.g., dirt or chewing gum). In another example, if the edge devices include a constellation of satellite devices with the same sensor payload, then the edge devices can compare their inference results for the same geographic regions in order to detect outliers caused by sensor variation. The edge device experiencing the variation can then send an increased volume of input data to the centralized site/device 1004, and the centralized site/device 1004 may retrain and update only this edge device to account for its sensor variation.

In operation 1020, the edge device 1002 may send only the collected datasets and the associated inference results for the inference results that indicate a performance variation to the centralized site/device 1004.

In operation block 1022, the centralized site/device 1004 may update the neural network based on these variational datasets (i.e., the datasets and associated inference results that indicate a performance variation). In some embodiments, the update operations may include only a partial retrain and/or a partial neural network update, particularly in the case where the neural network architecture is selected to enable such partial updating (i.e., a compartmentalized model). For example, updating the neural network to account for sensor variation may involve the modification of the fully connected layers only.

In operation block 1024, the centralized site/device 1004 may compress the updated neural network. In operation 1026, the centralized site/device 1004 may send the updated neural network to the edge device 1002.

In operation block 1028, the edge device 1002 may execute the updated neural network.

In another embodiment, this approach (e.g., method 1000) may be used for fault detection, isolation, and recovery (FDIR) by edge devices. In the FDIR case, the deployed neural network on the edge device has the specific purpose of detecting faults within the edge device or the system that the edge device is integrated into (as opposed to the previous embodiment where the neural network did not have the specific purpose of detecting faults, but whose outputs could nonetheless be analyzed, possibly in conjunction with other edge device outputs, to detect anomalies). In this scenario, in operation block 1014, one or more neural networks on the edge device 1002 may have been trained on the ground under normal operating conditions. In operation block 1018, these edge devices could serve (either individually or collectively) to monitor inputs and outputs to the edge device 1002 or to systems/subsystems on the edge device 1002. The neural network(s) themselves perform the analysis in operation block 1018 to detect variations from the expected performance of the system/subsystem that they are monitoring. For example, one such neural network might monitor the current on the power rails of an onboard processor. If the neural network determines that the current profiles fall outside of normal operation, it may generate an output alert (i.e., it classifies the current profiles into two or more classes such as normal and unexpected). The output alert triggers the edge device to send the centralized site/device a set of performance measures to enable analysis on the ground. This type of scenario could be used for example onboard satellites, where a silicon electronic device on the satellite can suffer a latch-up event due to radiation effects. The latch-up causes increased current draw.

The various embodiments may address the problem of delays (e.g., due to transmissions, etc.) in the processing chain preventing fast retargeting (e.g., for the case of earth observation satellites, reorienting of image sensors to detect features of interest for further imaging, or reorienting of image sensors to avoid features of little or no interest, such as clouds) of the edge sensors. Without this retargeting, the acquired data from the edge device may have lower quality/value (e.g., cloudy satellite images). This may result in a dynamically retargeted chain of edge devices (e.g., drones or fleets of autonomous robots or vehicles, or satellites in a constellation whose neural networks are enhanced by information from a proceeding edge device that is communicated directly via inter-device channels).

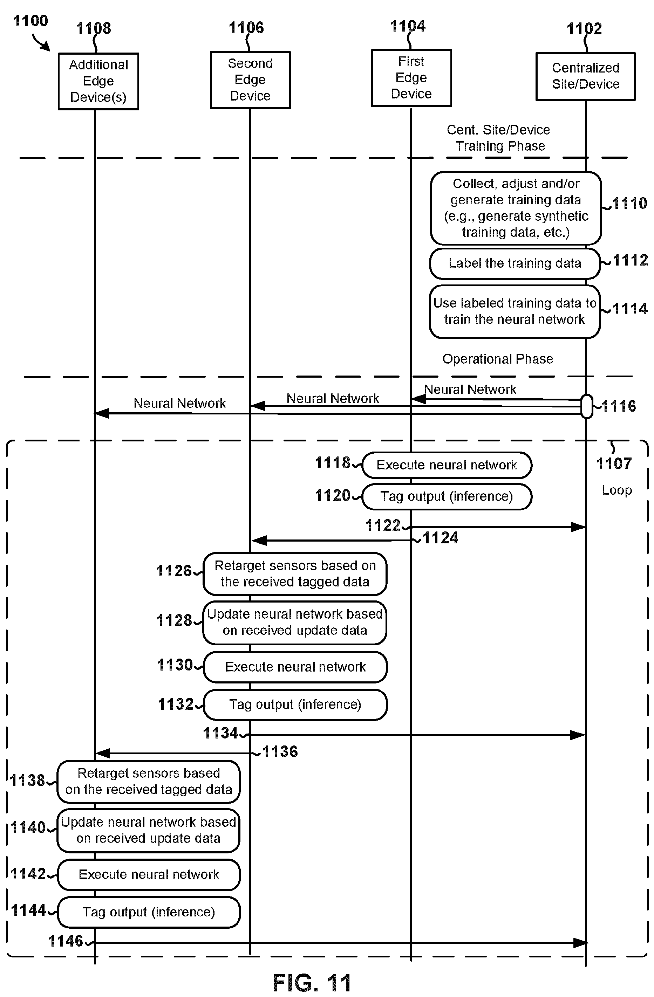

FIG. 11 illustrates a method 1100 for updating a neural network in accordance with an embodiment. In particular, FIG. 11 illustrates a chain of edge devices whose neural networks are enhanced by information from proceeding edge devices. Method 1100 may be performed in a system that includes a centralized site/device 1102, a first edge device 1104, a second edge device 1106, and additional edge devices 1108. The operations 1110-1146 of method 1100 may be performed in phases. For example, operations 1110-1114 may be performed during a centralized site/device training phase, and operations 1116-1146 may be performed during an operation phase. Operations 1118-1146 may be performed repeatedly in a loop 1107 as needed (e.g., until a desired level of accuracy or precision is achieved, etc.).

In operation block 1110, the centralized site/device 1102 may collect training data from existing edge devices and/or synthetically generate training data. In operation block 1110, the centralized site/device 1102 may label the training data. In operation block 1110, the centralized site/device 1102 may train a neural network solution on the labelled data.

In operation 1116, the centralized site/device 1102 may send the neural network to the first edge device 1104, the second edge device 1106, and/or the additional edge devices 1108.

The first edge device 1104 may optionally contain a lightweight neural network, and the second edge device 1106 and subsequent devices (e.g., the additional edge devices 1108) may contain a larger and more performant neural network. In this way the first edge device 1104 may perform an initial inference at low-power, and if the inference result is positive in some sense (e.g., the inference exceeds a certain threshold), then the trailing edge device (e.g., devices 1106, 1108) with the more performant neural network is assigned to retarget the sensing area of interest and to generate a high quality inference result. In an alternative embodiment, the leading and trailing devices are one and the same device. In this implementation, both the lightweight and more performant neural networks are on the same device, and the output from the lightweight neural network may be used to trigger inference with the performant neural network.

In operation block 1118, the first edge device 1104 may execute the neural network. In operation block 1120, the first edge device 1104 may tag the inference result (e.g., augments the neural network output with additional metadata such as geolocation, time, inference confidence, sensor configuration and orientation, temperature). In operation 1122, the first edge device 1104 may send the inference results and optionally parts of the collected datasets to the centralized site/device 1102. In operation 1124, the first edge device 1104 may send part or all of the neural network, and the tag data, to the second edge device 1106.

In operation block 1126, the second edge device 1106 may retarget sensors based on the received tagged data. In operation block 1128, the second edge device 1106 may update the neural network based on received neural network update. In operation block 1130, the second edge device 1106 may execute the neural network. In operation block 1132, the second edge device 1106 tags the inference result. In operation 1134, the second edge device 1106 may send the inference results and optionally parts of the collected datasets to the centralized site/device 1102.

In operation 1136, the second edge device 1106 may send part or all of the neural network (e.g., configuration, architecture, weights, thresholds), and the tag data, to one or more of the additional edge devices 1108. In operation block 1138, the additional edge device(s) 1108 may retarget sensors based on the received tagged data. In operation block 1140, the additional edge device(s) 1108 may update the neural network based on received neural network update. In operation block 1142, the additional edge device(s) 1108 may execute the neural network. In operation block 1144, the additional edge device(s) 1108 may tag the inference result. In operation 1146, the additional edge device(s) 1108 may send the inference results and optionally parts of the collected datasets to the centralized site/device 1102. Operations 1136-1146 may repeat for each additional edge device in the chain.

The various embodiments may provide a mission extension method for deployed edge devices in order to achieve a new trade-off between mission life and neural network accuracy. An initial neural network may be deployed on the edge device, and subsequently the neural network may be adjusted based on a pre-loaded/uplinked parameter (e.g., the relative priorities of power consumption and accuracy). Alternatively, the inference result may be used to adjust the same initial neural network or a complementary new neural network. For edge devices deployed as IoT devices, the only available power may be supplied by battery, and if not recharged or rechargeable this battery will have a finite energy capacity that it can deliver. In this situation, an augmentation to the neural network running on the edge device may achieve power savings (e.g., if the neural network is smaller the inference power required is less) on the device. The operational lifetime of the device may therefore be extended as a direct result of this change to the neural network. The tradeoff is that the inference may not be as accurate. In a drone example, the rate of inference on the edge device on the drone (which may for example be mapping moisture in fields using hyperspectral imaging) may be reduced if the drone is running low on battery power but is still distant from its desired landing location. In this case the goal is to reduce the power for inference (e.g., by reducing the inference rate, or by altering the neural network to enable continued moisture mapping, but with reduced accuracy) to facilitate the power reduction required to enable the drone to reach its landing zone.

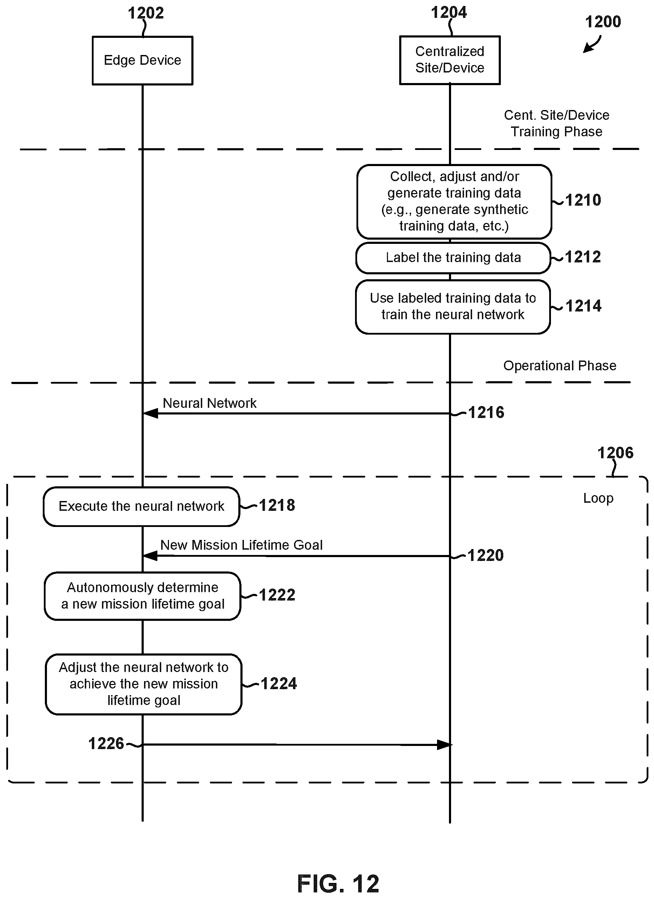

FIG. 12 illustrates a method 1200 for adjusting/updating a neural network to extend the mission of a deployed edge device 1202 in accordance with an embodiment. That is, FIG. 12 illustrates a mission extension method for deployed edge devices. The operations 1210-1126 of method 1200 may be performed in phases. For example, operations 1210-1214 may be performed during a centralized site/device training phase, and operations 1216-1126 may be performed during an operation phase. Operations 1218-1226 may be performed repeatedly in a loop 1206 as needed.

In operation block 1210, the centralized site/device 1204 may collect training data from existing edge devices and/or synthetically generate training data. In operation block 1212, the centralized site/device 1204 may label the training data. In operation block 1214, the centralized site/device 1204 may train a neural network on the labelled training data. In operation 1216, the centralized site/device 1204 may send the neural network to the edge device 1202.

In operation block 1218, the edge device 1202 may execute the neural network.

In some embodiments, in operation block 1220, the centralized site/device 1204 may send a new mission lifetime goal to the edge device 1202. This lifetime goal may be to reduce power in order to extend mission lifetime, for example in the case of a planetary rover, where the solar arrays used to recharge the rover's batteries become increasingly inefficient due to accumulation of dust and debris on their surface. By reducing the neural network size, the inference operation could consume less power (at the cost of accuracy), enabling the mission duration to be extended before the batteries can no longer be charged and become depleted. In another example, the battery energy capacity after each recharge for a mobile robot may decrease over time. In this case, the new mission goal may be for the neural network to perform less inferences per second, as the robot is travelling slower and therefore requires less frequent updates to the navigation algorithm that operates on the inference result.

In operation block 1222, the edge device 1202 may autonomously determine a new mission lifetime goal. In an embodiment, the mission lifetime goal may be determined by an inference result on the edge device 1202 itself. For example, in the case of ocean monitoring, the neural network may be deployed on a satellite, and the neural network may be detecting surface water on the earth. If the inference result is negative for surface water (for a certain length of time), then the neural network could power down for a certain length of time. In an alternative example, the parameter or mission lifetime goal may relate to power consumption on the edge device 1202, whereby a reduction in available power would automatically cause the neural network to be altered so as reduce its power consumption (i.e., a new mission goal)

In operation block 1224, the edge device 1202 may adjust the neural network to achieve the new mission lifetime goal. In some embodiments, this may be achieved by reducing the number of layers and/or weights in the neural network, or by reducing the precision of the weights, or by altering the aggregation function in an ensemble neural network. This is particularly beneficial when the neural network is large (and therefore changing/reducing it can have a significant power/latency benefit). In this way the inference power would be reduced enabling an extension of mission duration.

In operation 1226, the edge device 1202 may send the inference results and the new mission lifetime goal to the centralized site/device 1204. It may be advantageous to send the new mission lifetime goal if it was determined autonomously on device (e.g., in operation block 1222). Otherwise the goal would not be available on the ground, and it would likely need to be checked that it is a valid and useful goal.

The various embodiments may include methods, and computing devices configured to implement the methods, of performing transfer learning for neural networks at the edge of a network by receiving in a centralized device (e.g., a server computing device having one or more processors configured to implement all or portions of the functions of the centralized site/device discussed in this application) training data from at least one existing edge device, adjusting the training data, training a neural network using the received training data, and sending the trained neural network to a new edge device. In some embodiments, the training data may be adjusted based upon a known relationship between the sensors on the existing edge devices and the sensors in the new edge device.

In some embodiments, adjusting the training data may include generating synthetic data. In some embodiments, the methods may include executing in the edge device the received neural network, generating and storing the collected datasets and the associated inference result (e.g., using the received neural network and/or according to parameters that were received from the centralized device), and sending the collected datasets and the associated inference result to the centralized device. In some embodiments, the methods may further include updating in the centralized device the neural network based on the collected datasets and the associated neural network received from the edge device, and sending the updated neural network to the edge device. In some embodiments, the methods may further include updating in the edge device the neural network, and using the updated neural network.

The various embodiments may also include methods, and computing devices configured to implement the methods, of performing neural network updates for low-bandwidth uplink edge device deployments, which may include creating in a centralized device training data (e.g., by collecting training data from existing edge devices, synthetically generating training data, etc.), labeling the training data, training a neural network solution using the labelled data, and sending the neural network to an edge device. In some embodiments, the methods may further include executing in the edge device the received neural network, generating the collected datasets and the associated inference result, storing the collected datasets and the associated inference result, and sending the collected datasets and the associated inference result to the centralized device. In some embodiments, the methods may further include updating in the central device the neural network with the received collected datasets and the associated inference result, comparing the updated neural network against the original neural network, generating a neural network difference model (e.g., by compressing the neural network difference model, etc.), and sending the neural network difference model to the edge device. In some embodiments, updating in the central device the neural network with the received collected datasets and the associated inference result includes only updating parts of the neural network, in which the parts of the neural network to be updated are determined by the extent to which they differ from the original neural network. In some embodiments, the methods may further include updating in the edge device the neural network with the received neural network difference model, and executing the updated neural network.

The various embodiments may also include methods, and computing devices configured to implement the methods, of performing neural network updates without requiring any transmission of model data, which may include creating in a centralized device training data, labeling the training data, selecting two neural networks, training the selected two neural networks with the labelled training data, and sending the neural networks to an edge device. In some embodiments, the methods may further include executing in the edge device one neural network on the inference engine (e.g., using neuromorphic computing, etc.), executing the second neural network on the learning engine, using a long term application related goal to perform background learning on the learning engine, in parallel with neural network inference on the inference engine, providing rewards and values for the goal based learning engine based on output from the inference engine, performing learning update cycles on the learning engine to maximize the reward, updating the neural network on the inference engine using the outputs of the learning engine, and sending to the centralized device the inference result from the inference engine.

The various embodiments may also include methods, and computing devices configured to implement the methods, of performing a mission extension for deployed edge devices, which may include creating in a centralized device training data, labeling the training data, training a neural network with the labelled training data, and sending the neural networks to an edge device. In some embodiments, the methods may include executing in the edge device the received neural network, receiving a new mission lifetime goal, determining a new mission lifetime goal, adjusting the neural network to achieve the new mission lifetime goal, and sending to the centralized device the adjusted neural network.

The various embodiments may enable edge devices of different types to work together with a common centralized device. For example, in an earth observation case where buoys or autonomous boats/subs are deployed to observe phytoplankton in the oceans, the census figures for phytoplankton types in a given patch of ocean may be combined with the hyperspectral satellite data to allow identification of the species of plankton involved in particular plankton blooms based on the hyperspectral data alone. In another example, SAR surface data from one or more satellites may be combined with drone data via data fusion techniques to produce enhanced micro and macro tracking of earthworks during large infrastructural projects. In an e-scooter application the Global Navigation Satellite System (GNSS) location of the scooter can be combined with visual data from forward or rear facing image sensors to notify municipal authorities of dirty or obscured road signs.

The various embodiments may opportunely combine conventional DSP (Digital Signal Processing), ISP (Image Signal Processing), Convolutional Neural Networks (CNNs) and Neuromorphic hardware to produce accelerated ensemble processing solutions for the optimum in terms of processing power per watt onboard edge devices.

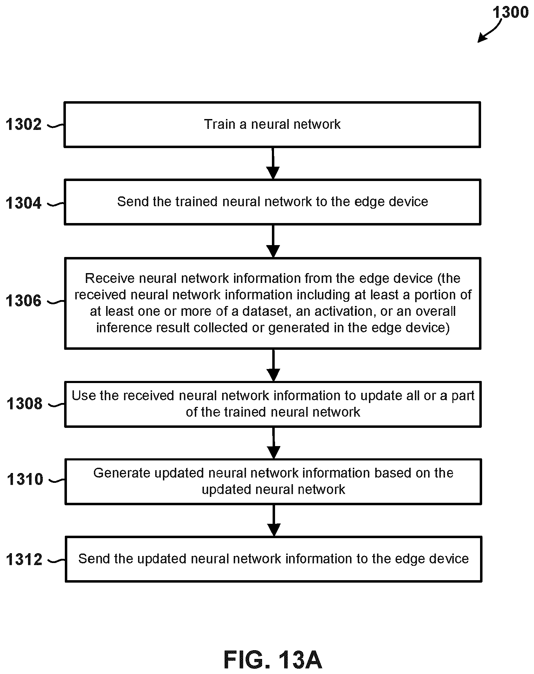

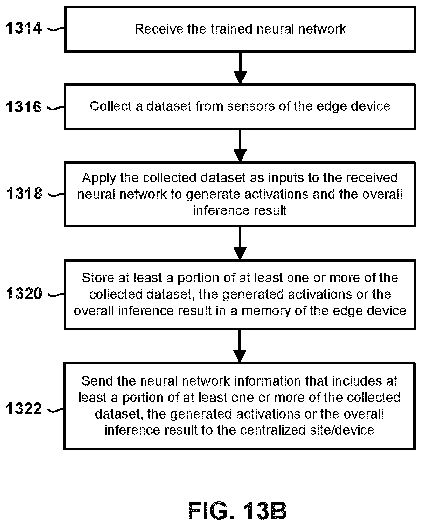

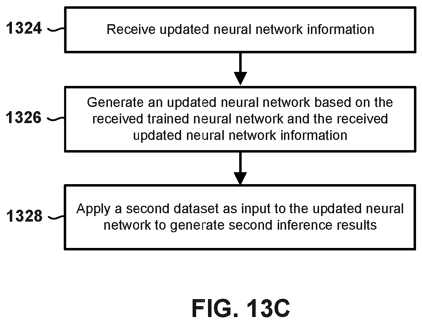

FIGs. 13A-13C illustrate a method 1300 of updating neural networks on edge devices that have limited connectivity in accordance with some embodiments (e.g., the embodiments described with reference to FIGs. 6-8, etc.). The operations in blocks 1302-1312 of FIG. 13A may be performed by a processor in a centralized site/device. The operations in blocks 1314-1322 in FIG. 13B and in blocks 1324-1328 in FIG. 13C may be performed by a processor in an edge device that has limited connectivity (e.g., low-bandwidth uplink capability, etc.).

With reference to FIG. 13A, in block 1302, the centralized site/device processor may train a neural network. For example, the centralized site/device may receive or collect training data from existing edge devices and/or synthetically generate training data, label the training data, and generate and train a neural network based on the labelled data. As another example, in block 1302, the centralized site/device may select an ensemble of lightweight neural networks, generate an ensemble (e.g., ensemble neural network, ensemble classifier, etc.) based on the neural networks, and train the ensemble of neural networks and an ensemble aggregation function on the labelled data. As yet another example, in block 1302, the centralized site/device may generate a stratified neural network that includes large data volume parts and small data parts, train the large data volume parts of the stratified neural network (e.g., feature identification layers, higher numerical precision, multiple partial layers that are not partitioned or cross-connected, etc.) on data from similar sensors, and train the small data parts of the neural network (e.g., fully connected layers, lower numerical precision, cross-connected weights between partial layers, etc.) on data collected from similar or related sensors (e.g., data from similar deployment environments but not necessarily from similar sensors, etc.). The centralized site/device may select an ensemble of lightweight neural networks, and train the entire neural network based on the labelled training data.

In block 1304, the centralized site/device processor may send the trained neural network to the edge device (e.g., an edge device that has not yet been deployed, an edge device deployed on a satellite, an edge device deployed to a location from which data has not previously been collected, etc.). In some embodiments, sending the trained neural network to the edge device in block 1304 may include sending the trained ensemble and an ensemble aggregation function to the edge device.

In block 1306, the centralized site/device processor may receive neural network information from the edge device. The received neural network information may including at least a portion of at least one or more of a dataset, an activation, or an overall inference result that was collected or generated in the edge device. In block 1308, the centralized site/device processor may use the received neural network information to update all or a part of the trained neural network.

In block 1310, the centralized site/device processor may generate updated neural network information based on the updated neural network. For example, the centralized site/device processor may add a neural network or a classifier to a trained ensemble. As another example, the centralized site/device processor may update an ensemble aggregation function based on a result of analyzing the received neural network information and update all or a part of the trained neural network based on the updated ensemble aggregation function.

In block 1312, the centralized site/device processor may send the updated neural network information to the edge device. For example, in blocks 1310 and 1312, the centralized site/device processor may generating a neural network difference model by comparing the updated neural network to the trained neural network, and send the generated neural network difference model to the edge device. As another example, in blocks 1310 and 1312, the centralized site/device processor may retrain only the small data parts of the stratified neural network, and send only the small data parts of the stratified neural network to the edge device.

With reference to FIG. 13B, in block 1314, the edge device processor may receive the trained neural network (e.g. the trained neural network sent in block 1304 of FIG. 13A). For example, the edge device processor may receive a stratified neural network, trained ensemble, neural network, classifier, or any of the AI models or neural networks discussed in this application. In block 1316, the edge device processor may collect data or a dataset from sensors of the edge device. In block 1318, the edge device processor may apply the collected dataset as inputs to the received neural network to generate activations and the overall inference result. Generating the neural network difference model may include generating a patch that identifies the differences between the updated neural network and the trained neural network. The patch may be generated via of any of the techniques discussed above (e.g., layer freezing using a minimum size technique, layer freezing using a minimum delta technique, weights freezing using the minimum size technique, weights freezing using the minimum delta technique, mean of activations of neurons/layers, etc.).

**In** block 1320, the edge device processor may store at least a portion of at least one or more of the collected dataset, the generated activations, or the overall inference result in a memory of the edge device. In block 1322, the edge device processor may send the neural network information that includes at least a portion of at least one or more of the collected dataset, the generated activations, or the overall inference result to the centralized site/device.

With reference to FIG. 13C, in block 1324, the edge device processor may receive updated neural network information (e.g., the updated neural network information sent in block 1312 of FIG. 13A). In block 1326, the edge device processor may generate an updated neural network based on the received trained neural network and the received updated neural network information. In block 1328, the edge device processor may apply a second dataset as input to the updated neural network to generate second inference results.

Some embodiments (e.g., the embodiments described with reference to FIG. 4, etc.) include methods of performing transfer learning for neural networks at the edge of a network, which may include receiving, by a processor of a centralized site/device, training data from at least one edge device, adjusting, by the processor, the received training data, using, by the processor, the adjusted received training data to train a neural network, and sending, by the processor, the trained neural network to a new edge device. In some embodiments, adjusting the received training data includes adjusting the received training data based upon a known relationship between sensors of the at least one edge device and sensors of the new edge device.

In some embodiments, the sensors of the new edge device may include a high spectral resolution hyperspectral sensor, and adjusting the received training data based upon the known relationship between the sensors of the at least one edge device and the sensors of the new edge device may include performing a synthesis function that maps existing hyperspectral bands from existing data to the one or more hyperspectral bands of the high spectral resolution hyperspectral sensor of the new edge device.

In some embodiments, adjusting the received training data may include generating synthetic data. In some embodiments, adjusting the received training data may include generating labelled training data. In some embodiments, sending the trained neural network to the new edge device may include sending the trained neural network to an edge device that has more advanced sensors than the at least one edge device.

In some embodiments, the method may include receiving, by the new edge device, the neural network from the centralized site/device, applying, by the new edge device, a collected dataset as input to the received neural network to generate inference results, storing, by the new edge device, at least a portion of the collected dataset and the generated inference results in memory, and sending, by the new edge device, at least a portion of collected dataset and the generated inference results to the centralized site/device.

In some embodiments, the method may include receiving, in the new edge device from the centralized site/device, a parameter that identifies a subset of information that is to be stored or used by the edge device, and determining one or more portions of the collected dataset and inference results to store based on the received parameter, in which storing at least a portion of the collected dataset and the generated inference results in memory may include storing only the determined portions in memory.

In some embodiments, the method may include comparing, by the new edge device, a runtime activation pattern of an image in the collected dataset to a stored runtime activation pattern calculated during training, using, by the new edge device, a result of the comparison to determine whether runtime images on which inference is performed are more closely related to synthetic training images or to non-synthetic training images, in which sending at least a portion of collected dataset and the generated inference results to the centralized site/device may include sending the runtime images determined to be more closely related to the synthetic training images to the centralized site/device.

In some embodiments, the method may include receiving, in the centralized site/device, information from new edge device, the received information including the collected dataset and the generated inference results send by the new edge device, updating, by the centralized site/device, the neural network based on the information received from the edge device, and sending, by the centralized site/device, the updated neural network to the edge device.

In some embodiments, the method may include receiving, by the new edge device, the updated neural network from the centralized site/device, and applying, by the new edge device, a collected dataset as input to the received updated neural network to generate updated inference results.

In some embodiments, receiving training data from at least one edge device may include receiving training data from a deployed satellite edge device, and sending the trained neural network to the new edge device may include sending the sending the trained neural network to a new satellite edge device.

Some embodiments (e.g., the embodiments described with reference to FIG. 9, etc.) may include performing neural network updates by performing operations that include receiving, by a processor in an edge device, a plurality of neural networks from a centralized site/device, executing one neural in the plurality of neural networks on an inference engine of the edge device, and executing another neural network in the plurality of neural networks on a learning engine of the edge device.

In some embodiments, executing one neural in the plurality of neural networks on the inference engine of the edge device and executing another neural network in the plurality of neural networks on the learning engine of the edge device may include using a long term application related goal to perform background learning on the learning engine in parallel with inference on the inference engine, providing a reward and a value for the goal based learning engine based on an output of the inference engine, performing learning update cycles on the learning engine to increase the reward, and updating the neural network on the inference engine based on the outputs of the learning engine.

In some embodiments, the method may include sending an overall inference result of the inference engine to the centralized site/device. In some embodiments, the method may include sending the output of the learning engine to the centralized site/device. In some embodiments, using the long term application related goal to perform the background learning on the learning engine in parallel with the inference on the inference engine may include using a preloaded long term application related goal to perform the background learning on the learning engine in parallel with the inference on the inference engine.

In some embodiments, the method may include receiving the long term application related goal from the centralized site/device, in which using the long term application related goal to perform the background learning on the learning engine in parallel with the inference on the inference engine includes receiving the long term application related goal to perform the background learning on the learning engine in parallel with the inference on the inference engine.

In some embodiments, updating the neural network on the inference engine based on the outputs of the learning engine may include autonomously loading the outputs of the learning engine. In some embodiments, executing one neural in the plurality of neural networks on the inference engine of the edge device and executing another neural network in the plurality of neural networks on the learning engine of the edge device may include executing a first type of neural network on the inference engine of the edge device, and executing a second type of neural network on the on the learning engine of the edge device, wherein the first type is different from the second type.

In some embodiments, executing one neural in the plurality of neural networks on the inference engine of the edge device and executing another neural network in the plurality of neural networks on the learning engine of the edge device may include using neuromorphic computing. In some embodiments, executing another neural network in the plurality of neural networks on the learning engine of the edge device may include preforming reinforcement learning on the learning engine. In some embodiments, executing another neural network in the plurality of neural networks on the learning engine of the edge device may include executing a neural network on a learning engine that may include an ensemble of spiking neural networks (SNNs). In some embodiments, executing one neural in the plurality of neural networks on the inference engine of the edge device and executing another neural network in the plurality of neural networks on the learning engine of the edge device may include performing inference and training within a single neural network.

In some embodiments, performing inference and training within a single neural network may include performing inference and training within a hybrid of a convolutional neural network (CNN) and a spiking neural network (SNN).

Some embodiments (e.g., the embodiments described with reference to FIG. 10, etc.) may include performing neural network model tuning to accommodate variation and faults, including receiving, by a processor in an edge device, a neural network from a centralized site/device, applying, by the processor, a collected dataset to the received neural network to generate activations and an overall inference result, analyzing, by the processor, the overall inference result to detect a performance variation, and sending, by the processor, only portions of the collected datasets, the generated activations, and overall inference result that indicate a performance variation to the centralized site/device. In some embodiments, the edge device may be a satellite.

In some embodiments, applying a collected dataset to the received neural network to generate the activations and the overall inference result and analyzing the overall inference result to detect a performance variation may include monitoring inputs and outputs to the edge device or to systems/subsystems on the edge device, and detecting variations from the expected performance of the system/subsystem that is being monitored. In some embodiments, analyzing the overall inference result to detect a performance variation may include comparing model outputs over time in order to detect statistically significant variations.

In some embodiments, the method may include receiving, by the centralized site/device, information that may include the portions of the collected datasets, the generated activations, and overall inference result that indicate a performance variation to the centralized site/device, updating, by the centralized site/device, the neural network based upon the received information, and sending, by the centralized site/device, the updated neural network to the edge device

In some embodiments, the method may include compressing the updated neural network to generate a compressed neural network, wherein sending the updated neural network to the edge device may include sending the compressed neural network to the edge device. In some embodiments, sending the updated neural network to the edge device may include sending the updated neural network model differences to the edge device. In some embodiments, updating the neural network based upon the received information may include only partially retraining or partially updating parts of the compartmentalized neural network model. In some embodiments, only partially retraining or partially updating parts of the compartmentalized neural network model may include modifying the fully connected layers of the neural network model.

In some embodiments, the method may include receiving in an edge device the updated neural network, and executing the updated neural network. In some embodiments, the receiving edge device is a different edge device than the sending edge device, and both edge devices have similar sensors. In some embodiments, executing the updated neural network may include executing updated neural network and discarding unreliable data before sending the collected datasets, the generated activations, and overall inference result that indicate a performance variation to the centralized site/device.

In some embodiments, the method may further include sending the collected datasets, the generated activations, and overall inference result that indicate a performance variation to other edge devices. In some embodiments, the method may include comparing the collected datasets, the generated activations, or the overall inference result to collected datasets, generated activations, or overall inference results received from the other edge devices. In some embodiments, the method may include sending to the centralized site/device the collected datasets, the generated activations, or the overall inference results that differed from the datasets, activations, or overall inference results received from the other edge devices. In some embodiments, the other edge devices are satellites with identical sensors in the same constellation as the edge device.

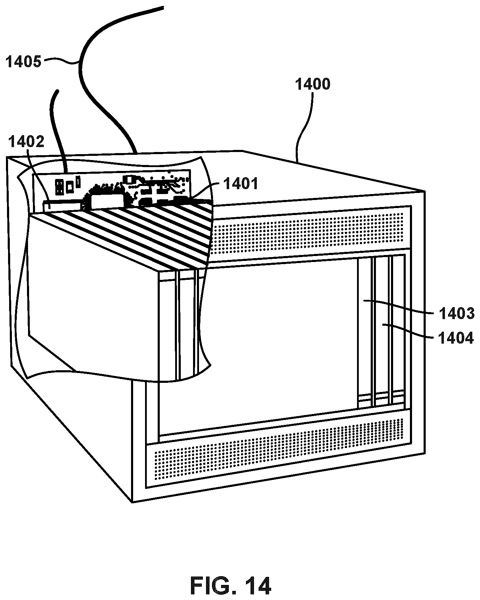

Some embodiments or components discussed in this application, such as the centralized site/device, may be implemented on or make use of any of a variety of commercially available server devices, an example of which is illustrated in FIG. 14. In particular, FIG. 14 illustrates a server 1400 that includes a processor 1401 coupled to volatile memory 1402 and a large capacity nonvolatile memory, such as a disk drive 1403. The server 1400 may also include network access ports 1404 coupled to the processor 1401 for establishing data connections with a network 1405, such as a local area network coupled to other operator network computers and servers, and/or for communicating with edge devices.

The processor 1401 may be any programmable microprocessor, microcomputer or multiple processor chip or chips that can be configured by software instructions (applications) to perform a variety of functions, including the functions of the various embodiments described below. Multiple processors 1401 may be provided, such as one processor dedicated to wireless communication functions and one processor dedicated to running other applications. Typically, software applications may be stored in the internal memory 1402, 1403 before they are accessed and loaded into the processor 1401. The processor 1401 may include internal memory sufficient to store the application software instructions.

The foregoing method descriptions and the process flow diagrams are provided merely as illustrative examples and are not intended to require or imply that the blocks of the various aspects must be performed in the order presented. As will be appreciated by one of skill in the art the order of steps in the foregoing aspects may be performed in any order. Words such as "thereafter," "then," "next," etc. are not intended to limit the order of the blocks, these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable medium or non-transitory processor-readable medium. The steps of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the following claims.

## Claims

1. A method of updating a neural network on an edge device that has low-bandwidth uplink capability, comprising:
initially training (614) by a processor in a centralized site/device, the neural network to create an initially trained neural network;
sending (616) by the processor, the initially trained neural network to the edge device;
receiving (622) by the processor, neural network information from the edge device, the received neural network information including at least a portion of at least one or more of a dataset, an activation, or an overall inference result collected or generated in the edge device;
using (624) by the processor, the received neural network information to create an updated trained neural network by updating all or a part of the initially trained neural network;
generating (626-630) by the processor, a neural network difference model by comparing the updated trained neural network to the initially trained neural network, wherein the neural network difference model comprises a patch that identifies the differences between the updated trained neural network and the initially trained neural network via one of:
layer freezing using a minimum size technique;
layer freezing using a minimum delta technique;
weights freezing using the minimum size technique;
wherein:
the minimum size technique comprises selecting or determining the layers or weights to be frozen based on an aggregate measure of the value of the weights in a layer;
the minimum delta technique comprises selecting or determining the layers to be frozen based on a measure of the aggregate changes in the weight values, as determined by comparing the layer weight values before and after a re-training cycle; and
sending (632) by the processor, the neural network difference model to the edge device.

2. The method of claim 1, wherein sending (616) the initially trained neural network to the edge device comprises sending the initially trained neural network to an edge device that has been deployed.

3. The method of claim 1, wherein generating the neural network difference model by comparing the updated trained neural network to the initially trained neural network comprises determining one or more neural network layers or one or more neural network weights of the one or more neural network layers to freeze based on a mean of activations of layers in the neural network.

4. The method of claim 1, further comprising:
receiving, by the edge device, the initially trained neural network;
collecting, by the edge device, the dataset from sensors of the edge device;
applying, by the edge device, the collected dataset as inputs to the received initially trained neural network to generate activations and the overall inference result;
storing, by the edge device, at least a portion of at least one or more of the collected dataset, the generated activations or the overall inference result in a memory of the edge device; and
sending, by the edge device, the neural network information that includes at least a portion of at least one or more of the collected dataset, the generated activations or the overall inference result to the centralized site/device.

5. The method of claim 4, further comprising:
receiving, by the edge device, the neural network difference model;
generating, by the edge device, an updated neural network based on the received initially trained neural network and the received neural network difference model; and
applying a second dataset as input to the updated neural network to generate second inference results.

6. The method of claim 1, wherein:
initially training (614) the neural network comprises:
collecting training data from one or more of a plurality of edge devices;
labelling the collected training data;
selecting two or more lightweight neural networks;
generating an ensemble based on the selected neural networks; and
using the labelled training data to train the ensemble; and
sending the trained neural network to the edge device comprises:
sending the trained ensemble and an ensemble aggregation function to the edge device.

7. The method of claim 6, wherein using the received neural network information to create an updated trained neural network by updating all or a part of the initially trained neural network comprises adding a neural network to the trained ensemble.

8. The method of claim 6, wherein using the received neural network information to create an updated trained neural network by updating all or a part of the initially trained neural network comprises:
updating the ensemble aggregation function based on a result of analyzing the received neural network information; and
updating all or a part of the initially trained neural network based on the updated ensemble aggregation function.

9. The method of claim 4, wherein:
receiving the initially trained neural network comprises receiving a trained ensemble; and
applying the collected dataset as inputs to the received initially trained neural network to generate the activations and the overall inference result comprises applying the collected dataset as inputs to the received trained ensemble to generate the activations and the overall inference result.

10. The method of claim 1, wherein initially training (614) the neural network comprises generating a stratified neural network that includes large data volume parts and small data parts.

11. The method of claim 10, wherein sending the neural network difference model to the edge device comprises sending the small data parts of the stratified neural network to the edge device.

12. The method of claim 10, wherein generating the stratified neural network that includes the large data volume parts and the small data parts comprises:
generating the stratified neural network to include:
a large data volume part that include a feature identification layer; and
a small data part that includes a fully connected layer.

13. The method of claim 10, wherein generating the stratified neural network that includes the large data volume parts and the small data parts comprises:
generating the stratified neural network to include:
large data volume parts that include multiple partial layers that are not cross-connected; and
small data parts that include cross-connected weights between the multiple partial layers in the large data volume parts, or
generating the stratified neural network to include:
large data volume parts that include layers with a higher numerical precision; and
small data parts that include layers with a lower numerical precision.

14. A centralized site/device, comprising
a processor is configured with processor-executable instructions to perform operations comprising:
initially training (614) a neural network;
sending (616) the initially trained neural network to an edge device that has low-bandwidth uplink capability;
receiving (622) neural network information from the edge device, the received neural network information including at least a portion of at least one or more of a dataset, an activation, or an overall inference result collected or generated in the edge device;
using (624) the received neural network information to create an updated trained neural network by updating all or a part of the initially trained neural network;
generating (626-630) a neural network difference model by comparing the updated trained neural network to the initially trained neural network, wherein the neural network difference model comprises a patch that identifies the differences between the updated trained neural network and the initially trained neural network via one of:
layer freezing using a minimum size technique;
layer freezing using a minimum delta technique;
weights freezing using the minimum size technique;
wherein:
the minimum size technique comprises selecting or determining the layers or the weights to be frozen based on an aggregate measure of the value of the weights in a layer;
the minimum delta technique comprises selecting or determining the layers to be frozen based on a measure of the aggregate changes in the weight values, as determined by comparing the layer weight values before and after a re-training cycle; and
sending (632) the neural network difference model to the edge device.

15. A non-transitory computer readable storage medium having stored thereon processor-executable software instructions configured to cause a processor in a centralized site/device to perform operations for updating a neural network on an edge device that has low-bandwidth uplink capability, the operations comprising:
initially training (614) a neural network;
sending (616) the initially trained neural network to an edge device that has low-bandwidth uplink capability;
receiving (622) neural network information from the edge device, the received neural network information including at least a portion of at least one or more of a dataset, an activation, or an overall inference result collected or generated in the edge device;
using (624) the received neural network information to create an updated trained neural network by updating all or a part of the initially trained neural network;
generating (626-630) a neural network difference model by comparing the updated trained neural network to the initially trained neural network, wherein the neural network difference model comprises a patch that identifies the differences between the updated trained neural network and the initially trained neural network via one of:
layer freezing using a minimum size technique;
layer freezing using a minimum delta technique;
weights freezing using the minimum size technique; or
weights freezing using the minimum delta technique;
wherein:
the minimum size technique comprises selecting or determining the layers or weights to be frozen based on an aggregate measure of the value of the weights in a layer;
the minimum delta technique comprises selecting or determining the layers or weights to be frozen based on a measure of the aggregate changes in the weight values, as determined by comparing the layer weight values before and after a re-training cycle; and
sending (632) the neural network difference model to the edge device.

## Patentansprüche

1. Verfahren zum Aktualisieren eines neuronalen Netzwerks auf einer Edge-Vorrichtung, die Uplink-Fähigkeit mit geringer Bandbreite aufweist, umfassend:
anfängliches Trainieren (614) durch einen Prozessor an einer zentralen Stelle/Vorrichtung des neuronalen Netzwerks, um ein anfänglich trainiertes neuronales Netzwerk zu erzeugen;
Senden (616) durch den Prozessor des anfänglich trainierten neuronalen Netzwerks an die Edge-Vorrichtung;
Empfangen (622) durch den Prozessor von neuronalen Netzwerk-Informationen von der Edge-Vorrichtung, wobei die empfangenen neuronalen Netzwerk-Informationen mindestens einen Teil von mindestens einem oder mehreren von einem Datensatz, einer Aktivierung oder einem Inferenzergebnis beinhalten, die in der Edge-Vorrichtung gesammelt oder erzeugt wurden;
Verwenden (624) durch den Prozessor der empfangenen neuronalen Netzwerk-Informationen, um ein aktualisiertes trainiertes neuronales Netzwerk zu erzeugen, indem das gesamte anfänglich trainierte neuronale Netzwerk oder ein Teil davon aktualisiert wird;
Erzeugen (626-630) durch den Prozessor eines neuronalen Netzwerk-Differenzmodells durch Vergleichen des aktualisierten trainierten neuronalen Netzwerks mit dem anfänglich trainierten neuronalen Netzwerk, wobei das neuronale Netzwerk-Differenzmodell einen Patch umfasst, der die Unterschiede zwischen dem aktualisierten trainierten neuronalen Netzwerk und dem anfänglich trainierten neuronalen Netzwerk über eines der folgenden identifiziert:
Schicht-Einfrieren unter Verwendung einer Minimalgröße-Technik;
Schicht-Einfrieren unter Verwendung einer Minimaldelta-Technik;
Gewichtungs-Einfrieren unter Verwendung der Minimalgröße-Technik;
wobei:
die Minimalgröße-Technik das Auswählen oder Bestimmen der Schichten oder Gewichtungen, die eingefroren werden sollen, basierend auf einem aggregierten Maß des Werts der Gewichtungen in einer Schicht umfasst;
die Minimaldelta-Technik das Auswählen oder Bestimmen der Schichten, die eingefroren werden sollen, basierend auf einem Maß der aggregierten Änderungen in den Gewichtungswerten umfasst, wie durch Vergleichen der Schicht-Gewichtungswerte vor und nach einem Nachtrainings-Zyklus bestimmt; und
Senden (632) durch den Prozessor des neuronalen Netzwerk-Differenzmodells an die Edge-Vorrichtung.

2. Verfahren nach Anspruch 1, wobei das Senden (616) des anfänglich trainierten neuronalen Netzwerks an die Edge-Vorrichtung das Senden des anfänglich trainierten neuronalen Netzwerks an eine Edge-Vorrichtung umfasst, die bereitgestellt wurde.

3. Verfahren nach Anspruch 1, wobei das Erzeugen des neuronalen Netzwerk-Differenzmodells durch Vergleichen des aktualisierten trainierten neuronalen Netzwerks mit dem anfänglich trainierten neuronalen Netzwerk das Bestimmen einer oder mehrerer neuronaler Netzwerk-Schichten oder einer oder mehrerer neuronaler Netzwerk-Gewichtungen der einen oder mehreren neuronalen Netzwerk-Schichten, die eingefroren werden sollen, basierend auf einem Mittelwert von Aktivierungen von Schichten in dem neuronalen Netzwerk umfasst.

4. Verfahren nach Anspruch 1, ferner umfassend:
Empfangen durch die Edge-Vorrichtung des anfänglich trainierten neuronalen Netzwerks;
Sammeln durch die Edge-Vorrichtung des Datensatzes von Sensoren der Edge-Vorrichtung;
Anwenden durch die Edge-Vorrichtung des gesammelten Datensatzes als Eingaben auf das empfangene anfänglich trainierte neuronale Netzwerk, um Aktivierungen und das Inferenzergebnis zu erzeugen;
Speichern durch die Edge-Vorrichtung von mindestens einem Teil von mindestens einem oder mehreren von dem gesammelten Datensatz, den erzeugten Aktivierungen oder dem Inferenzergebnis in einem Speicher der Edge-Vorrichtung; und
Senden durch die Edge-Vorrichtung der neuronalen Netzwerk-Informationen, die mindestens einen Teil von mindestens einem oder mehreren von dem gesammelten Datensatz, den erzeugten Aktivierungen oder dem Inferenzergebnis beinhalten, an die zentrale Stelle/Vorrichtung.

5. Verfahren nach Anspruch 4, ferner umfassend:
Empfangen durch die Edge-Vorrichtung des neuronalen Netzwerk-Differenzmodells;
Erzeugen durch die Edge-Vorrichtung eines aktualisierten neuronalen Netzwerks basierend auf dem empfangenen anfänglich trainierten neuronalen Netzwerk und dem empfangenen neuronalen Netzwerk-Differenzmodell; und
Anwenden eines zweiten Datensatzes als Eingabe auf das aktualisierte neuronale Netzwerk, um zweite Inferenzergebnisse zu erzeugen.

6. Verfahren nach Anspruch 1, wobei:
das anfängliche Trainieren (614) des neuronalen Netzwerks umfasst:
Sammeln von Trainingsdaten von einer oder mehreren von einer Vielzahl von Edge-Vorrichtungen;
Kennzeichnung der gesammelten Trainingsdaten;
Auswählen von zwei oder mehr leichtgewichtigen neuronalen Netzwerken;
Erzeugen eines Ensembles basierend auf den ausgewählten neuronalen Netzwerken; und
Verwenden der gekennzeichneten Trainingsdaten, um das Ensemble zu trainieren; und
das Senden des trainierten neuronalen Netzwerks an die Edge-Vorrichtung umfasst:
Senden des trainierten Ensembles und einer Ensemble-Aggregationsfunktion an die Edge-Vorrichtung.

7. Verfahren nach Anspruch 6, wobei das Verwenden der empfangenen neuronalen Netzwerk-Informationen, um ein aktualisiertes trainiertes neuronales Netzwerk zu erzeugen, indem das gesamte anfänglich trainierte neuronale Netzwerk oder ein Teil davon aktualisiert wird, das Hinzufügen eines neuronalen Netzwerks zu dem trainierten Ensemble umfasst.

8. Verfahren nach Anspruch 6, wobei das Verwenden der empfangenen neuronalen Netzwerk-Informationen, um ein aktualisiertes trainiertes neuronales Netzwerk zu erzeugen, indem das gesamte anfänglich trainierte neuronale Netzwerk oder ein Teil davon aktualisiert wird, umfasst:
Aktualisieren der Ensemble-Aggregationsfunktion basierend auf einem Ergebnis des Analysierens der empfangenen neuronalen Netzwerk-Informationen; und
Aktualisieren des gesamten anfänglich trainierten neuronalen Netzwerks oder eines Teils davon basierend auf der aktualisierten Ensemble-Aggregationsfunktion.

9. Verfahren nach Anspruch 4, wobei:
das Empfangen des anfänglich trainierten neuronalen Netzwerks das Empfangen eines trainierten Ensembles umfasst; und
das Anwenden des gesammelten Datensatzes als Eingaben auf das empfangene anfänglich trainierte neuronale Netzwerk, um die Aktivierungen und das Inferenzergebnis zu erzeugen, das Anwenden des gesammelten Datensatzes als Eingaben auf das empfangene trainierte Ensemble umfasst, um die Aktivierungen und das Inferenzergebnis zu erzeugen.

10. Verfahren nach Anspruch 1, wobei das anfängliche Trainieren (614) des neuronalen Netzwerks das Erzeugen eines geschichteten neuronalen Netzwerks umfasst, das Teile mit großem Datenvolumen und Teile mit kleinen Daten beinhaltet.

11. Verfahren nach Anspruch 10, wobei das Senden des neuronalen Netzwerk-Differenzmodells an die Edge-Vorrichtung das Senden der Teile mit kleinen Daten des geschichteten neuronalen Netzwerks an die Edge-Vorrichtung umfasst.

12. Verfahren nach Anspruch 10, wobei das Erzeugen des geschichteten neuronalen Netzwerks, das die Teile mit großem Datenvolumen und die Teile mit kleinen Daten beinhaltet, umfasst:
Erzeugen des geschichteten neuronalen Netzwerks, um Folgendes zu beinhalten:
einen Teil mit großem Datenvolumen, der eine Merkmalsidentifikationsschicht beinhaltet; und
einen Teil mit kleinen Daten, der eine vollständig verbundene Schicht beinhaltet.

13. Verfahren nach Anspruch 10, wobei das Erzeugen des geschichteten neuronalen Netzwerks, das die Teile mit großem Datenvolumen und die Teile mit kleinen Daten beinhaltet, Folgendes umfasst:
Erzeugen des geschichteten neuronalen Netzwerks, um Folgendes zu beinhalten:
Teile mit großem Datenvolumen, die mehrere Teilschichten beinhalten, die nicht kreuzverbunden sind; und
Teile mit kleinen Daten, die kreuzverbundene Gewichtungen zwischen den mehreren Teilschichten in den Teilen mit großem Datenvolumen beinhalten, oder
Erzeugen des geschichteten neuronalen Netzwerks, um Folgendes zu beinhalten:
Teile mit großem Datenvolumen, die Schichten mit einer höheren numerischen Genauigkeit beinhalten; und
Teile mit kleinen Daten, die Schichten mit einer niedrigeren numerischen Genauigkeit beinhalten.

14. Zentrale Stelle/Vorrichtung, umfassend
einen Prozessor, der mit prozessorausführbaren Anweisungen konfiguriert ist, um Operationen durchzuführen, die Folgendes umfassen:
anfängliches Trainieren (614) eines neuronalen Netzwerks;
Senden (616) des anfänglich trainierten neuronalen Netzwerks an eine Edge-Vorrichtung, die eine Uplink-Fähigkeit mit geringer Bandbreite aufweist;
Empfangen (622) von Informationen des neuronalen Netzwerks von der Edge-Vorrichtung, wobei die empfangenen Informationen des neuronalen Netzwerks mindestens einen Teil von mindestens einem oder mehreren von einem Datensatz, einer Aktivierung oder einem Inferenzergebnis beinhalten, die in der Edge-Vorrichtung gesammelt oder erzeugt wurden;
Verwenden (624) der empfangenen Informationen des neuronalen Netzwerks zum Erstellen eines aktualisierten trainierten neuronalen Netzwerks durch Aktualisieren von allem oder einem Teil des anfänglich trainierten neuronalen Netzwerks;
Erzeugen (626-630) eines neuronalen Netzwerk-Differenzmodells durch Vergleichen des aktualisierten trainierten neuronalen Netzwerks mit dem anfänglich trainierten neuronalen Netzwerk, wobei das neuronale Netzwerk-Differenzmodell einen Patch umfasst, der die Unterschiede zwischen dem aktualisierten trainierten neuronalen Netzwerk und dem anfänglich trainierten neuronalen Netzwerk über eines der Folgenden identifiziert:
Schicht-Einfrieren unter Verwendung einer Minimalgröße-Technik;
Schicht-Einfrieren unter Verwendung einer Minimaldelta-Technik;
Gewichtungs-Einfrieren unter Verwendung der Minimalgröße-Technik;
wobei:
die Minimalgröße-Technik das Auswählen oder Bestimmen der einzufrierenden Schichten oder Gewichtungen basierend auf einem aggregierten Maß des Werts der Gewichtungen in einer Schicht umfasst;
die Minimaldelta-Technik das Auswählen oder Bestimmen der einzufrierenden Schichten basierend auf einem Maß der aggregierten Änderungen in den Gewichtungswerten umfasst, wie durch Vergleichen der Gewichtungswerte der Schicht vor und nach einem Nachtrainings-Zyklus bestimmt; und
Senden (632) des neuronalen Netzwerk-Differenzmodells an die Edge-Vorrichtung.

15. Nichtflüchtiges computerlesbares Speichermedium, auf dem prozessorausführbare Softwareanweisungen gespeichert sind, die konfiguriert sind, um einen Prozessor in einer zentralen Stelle/Vorrichtung zu veranlassen, Operationen zum Aktualisieren eines neuronalen Netzwerks auf einer Edge-Vorrichtung, die eine Uplink-Fähigkeit mit geringer Bandbreite aufweist, durchzuführen, wobei die Operationen Folgendes umfassen:
anfängliches Trainieren (614) eines neuronalen Netzwerks;
Senden (616) des anfänglich trainierten neuronalen Netzwerks an eine Edge-Vorrichtung, die eine Uplink-Fähigkeit mit geringer Bandbreite aufweist;
Empfangen (622) von Informationen des neuronalen Netzwerks von der Edge-Vorrichtung, wobei die empfangenen Informationen des neuronalen Netzwerks mindestens einen Teil von mindestens einem oder mehreren von einem Datensatz, einer Aktivierung oder einem Inferenzergebnis beinhalten, die in der Edge-Vorrichtung gesammelt oder erzeugt wurden;
Verwenden (624) der empfangenen Informationen des neuronalen Netzwerks zum Erstellen eines aktualisierten trainierten neuronalen Netzwerks durch Aktualisieren von allem oder einem Teil des anfänglich trainierten neuronalen Netzwerks;
Erzeugen (626-630) eines neuronalen Netzwerk-Differenzmodells durch Vergleichen des aktualisierten trainierten neuronalen Netzwerks mit dem anfänglich trainierten neuronalen Netzwerk, wobei das neuronale Netzwerk-Differenzmodell einen Patch umfasst, der die Unterschiede zwischen dem aktualisierten trainierten neuronalen Netzwerk und dem anfänglich trainierten neuronalen Netzwerk über eines der Folgenden identifiziert:
Schicht-Einfrieren unter Verwendung einer Minimalgröße-Technik;
Schicht-Einfrieren unter Verwendung einer Minimaldelta-Technik;
Gewichtungs-Einfrieren unter Verwendung der Minimalgröße-Technik; oder
Gewichtungs-Einfrieren unter Verwendung der Minimaldelta-Technik;
wobei:
die Minimalgröße-Technik das Auswählen oder Bestimmen der einzufrierenden Schichten oder Gewichtungen basierend auf einem aggregierten Maß des Werts der Gewichtungen in einer Schicht umfasst;
die Minimaldelta-Technik das Auswählen oder Bestimmen der einzufrierenden Schichten oder Gewichtungen basierend auf einem Maß der aggregierten Änderungen in den Gewichtungswerten umfasst, wie durch Vergleichen der Gewichtungswerte der Schicht vor und nach einem Nachtrainings-Zyklus bestimmt; und
Senden (632) des neuronalen Netzwerk-Differenzmodells an die Edge-Vorrichtung.

## Revendications

1. Procédé de mise à jour d'un réseau neuronal sur un dispositif périphérique qui est doté d'une capacité de liaison montante à faible bande passante, comprenant :
la formation initiale (614), par un processeur dans un site/dispositif centralisé, du réseau neuronal pour créer un réseau neuronal initialement entraîné ;
l'envoi (616), par le processeur, du réseau neuronal initialement entraîné vers le dispositif périphérique ;
la réception (622), par le processeur, d'informations sur le réseau neuronal provenant du dispositif périphérique, les informations sur le réseau neuronal reçues comportant au moins une partie d'au moins un ou plusieurs éléments d'un ensemble de données, d'une activation ou d'un résultat d'inférence global collecté ou généré dans le dispositif périphérique ;
l'utilisation (624), par le processeur, des informations sur le réseau neuronal reçues pour créer un réseau neuronal entraîné mis à jour en mettant à jour tout ou partie du réseau neuronal initialement entraîné ;
la génération (626-630), par le processeur, d'un modèle de différence de réseau neuronal en comparant le réseau neuronal entraîné mis à jour au réseau neuronal initialement entraîné, dans lequel le modèle de différence de réseau neuronal comprend un patch qui identifie les différences entre le réseau neuronal entraîné mis à jour et le réseau neuronal initialement entraîné via l'un des moyens suivants :
la congélation par couches utilisant une technique de taille minimale ;
la congélation par couches utilisant une technique de delta minimal ;
la congélation par poids utilisant la technique de taille minimale ;
dans lequel :
la technique de taille minimale comprend la sélection ou la détermination des couches ou des poids à congeler sur la base d'une mesure agrégée de la valeur des poids dans une couche ;
la technique de delta minimal comprend la sélection ou la détermination des couches à congeler sur la base d'une mesure des variations agrégées des valeurs de poids, déterminée en comparant les valeurs de poids des couches avant et après un cycle de ré-entraînement ; et
l'envoi (632), par le processeur, du modèle de différence de réseau neuronal au dispositif périphérique.

2. Procédé selon la revendication 1, dans lequel l'envoi (616) du réseau neuronal initialement entraîné au dispositif périphérique comprend l'envoi du réseau neuronal initialement entraîné à un dispositif périphérique qui a été déployé.

3. Procédé selon la revendication 1, dans lequel la génération du modèle de différence de réseau neuronal en comparant le réseau neuronal entraîné mis à jour au réseau neuronal initialement entraîné comprend la détermination d'une ou plusieurs couches du réseau neuronal ou d'un ou plusieurs poids du réseau neuronal des une ou plusieurs couches du réseau neuronal à congeler sur la base d'une moyenne d'activations des couches du réseau neuronal.

4. Procédé selon la revendication 1, comprenant également :
la réception, par le dispositif périphérique, du réseau neuronal initialement entraîné ;
la collecte, par le dispositif périphérique, de l'ensemble de données provenant de capteurs du dispositif périphérique ;
l'application, par le dispositif périphérique, de l'ensemble de données collectées comme entrées du réseau neuronal initialement entraîné reçu pour générer des activations et le résultat d'inférence global ;
le stockage, par le dispositif périphérique, d'au moins une partie d'au moins un ou plusieurs éléments parmi l'ensemble de données collectées, les activations générées ou le résultat global de l'inférence dans une mémoire du dispositif périphérique ; et
l'envoi, par le dispositif périphérique, des informations sur le réseau neuronal qui comportent au moins une partie d'au moins un ou plusieurs éléments parmi l'ensemble de données collectées, les activations générées ou le résultat global de l'inférence vers le site/dispositif centralisé.

5. Procédé selon la revendication 4, comprenant également :
la réception, par le dispositif périphérique, du modèle de différence de réseau neuronal ;
la génération, par le dispositif périphérique, d'un réseau neuronal mis à jour basé sur le réseau neuronal initialement entraîné et le modèle de différence de réseau neuronal reçu ; et
l'application d'un second ensemble de données comme entrée au réseau neuronal mis à jour pour générer des seconds résultats d'inférence.

6. Procédé selon la revendication 1, dans lequel :
l'entraînement initial (614) du réseau neuronal comprend :
la collecte de données d'entraînement provenant d'un ou plusieurs d'une pluralité de dispositifs périphériques ;
l'étiquetage des données d'entraînement collectées ;
la sélection de deux réseaux neuronaux légers ou plus ;
la génération d'un ensemble basé sur les réseaux neuronaux sélectionnés ; et
l'utilisation des données d'entraînement étiquetées pour entraîner l'ensemble ; et
l'envoi du réseau neuronal entraîné au dispositif périphérique comprend :
l'envoi de l'ensemble entraîné et d'une fonction d'agrégation d'ensemble au dispositif périphérique.

7. Procédé selon la revendication 6, dans lequel l'utilisation des informations sur le réseau neuronal reçues pour créer un réseau neuronal entraîné mis à jour en mettant à jour tout ou partie du réseau neuronal initialement entraîné comprend l'ajout d'un réseau neuronal à l'ensemble entraîné.

8. Procédé selon la revendication 6, dans lequel l'utilisation des informations sur le réseau neuronal reçues pour créer un réseau neuronal entraîné mis à jour en mettant à jour tout ou partie du réseau neuronal initialement entraîné comprend :
la mise à jour de la fonction d'agrégation d'ensemble sur la base d'un résultat de l'analyse des informations reçues sur le réseau neuronal ; et
la mise à jour de tout ou partie du réseau neuronal initialement entraîné sur la base de la fonction d'agrégation d'ensemble mise à jour.

9. Procédé selon la revendication 4, dans lequel :
la réception du réseau neuronal initialement entraîné comprend la réception d'un ensemble entraîné ; et
l'application de l'ensemble de données collectées comme entrées au réseau neuronal initialement entraîné pour générer les activations et le résultat global de l'inférence comprend l'application de l'ensemble de données collectées comme entrées à l'ensemble entraîné reçu pour générer les activations et le résultat global de l'inférence.

10. Procédé selon la revendication 1, dans lequel l'entraînement initial (614) du réseau neuronal comprend la génération d'un réseau neuronal stratifié qui comporte des grandes parties de volume de données et des petites parties de données.

11. Procédé selon la revendication 10, dans lequel l'envoi du modèle de différence de réseau neuronal au dispositif périphérique comprend l'envoi des petites parties de données du réseau neuronal stratifié au dispositif périphérique.

12. Procédé selon la revendication 10, dans lequel la génération du réseau neuronal stratifié qui comporte les grandes parties de volume de données et les petites parties de données comprend :
la génération du réseau neuronal stratifié de façon à comporter :
une grande partie de volume de données qui comporte une couche d'identification des caractéristiques ; et
une petite partie de données qui comporte une couche entièrement connectée.

13. Procédé selon la revendication 10, dans lequel la génération du réseau neuronal stratifié qui comporte les grandes parties de volume de données et les petites parties de données comprend :
la génération du réseau neuronal stratifié de façon à comporter :
des grandes parties de volume de données qui comportent de multiples couches partielles qui ne sont pas interconnectées ; et
des petites parties de données qui comportent des poids interconnectés entre les multiples couches partielles dans les grandes parties de volume de données, ou
la génération du réseau neuronal stratifié de façon à comporter :
des grandes parties de volume de données qui comportent des couches avec une précision numérique plus élevée ; et
des petites parties de données qui comportent des couches avec une précision numérique plus faible.

14. Site/dispositif centralisé, comprenant
un processeur qui est configuré avec des instructions exécutables par le processeur pour réaliser des opérations comprenant :
l'entraînement initial (614) d'un réseau neuronal :
l'envoi (616) du réseau neuronal initialement entraîné à un dispositif périphérique qui est doté d'une capacité de liaison montante à faible bande passante ;
la réception (622) d'informations sur le réseau neuronal provenant du dispositif périphérique, les informations sur le réseau neuronal reçues comportant au moins une partie d'au moins un ou plusieurs éléments d'un ensemble de données, d'une activation ou d'un résultat d'inférence global collecté ou généré dans le dispositif périphérique ;
l'utilisation (624) des informations sur le réseau neuronal reçues pour créer un réseau neuronal entraîné mis à jour en mettant à jour tout ou partie du réseau neuronal initialement entraîné ;
la génération (626-630) d'un modèle de différence de réseau neuronal en comparant le réseau neuronal entraîné mis à jour au réseau neuronal initialement entraîné, dans lequel le modèle de différence de réseau neuronal comprend un patch qui identifie les différences entre le réseau neuronal entraîné mis à jour et le réseau neuronal initialement entraîné via l'un des moyens suivants :
la congélation par couches utilisant une technique de taille minimale ;
la congélation par couches utilisant une technique de delta minimal ;
la congélation par poids utilisant la technique de taille minimale ;
dans lequel :
la technique de taille minimale comprend la sélection ou la détermination des couches ou des poids à congeler sur la base d'une mesure agrégée de la valeur des poids dans une couche ;
la technique de delta minimal comprend la sélection ou la détermination des couches à congeler sur la base d'une mesure des variations agrégées des valeurs de poids, déterminée en comparant les valeurs de poids des couches avant et après un cycle de ré-entraînement ; et
l'envoi (632) du modèle de différence de réseau neuronal au dispositif périphérique.

15. Support de stockage non transitoire lisible par ordinateur sur lequel sont stockées des instructions logicielles exécutables par processeur, configurées pour amener un processeur situé sur un site/dispositif centralisé à réaliser des opérations de mise à jour d'un réseau neuronal sur un dispositif périphérique qui est doté d'une capacité de liaison montante à faible bande passante, les opérations comprenant :
l'entraînement initial (614) d'un réseau neuronal :
l'envoi (616) du réseau neuronal initialement entraîné à un dispositif périphérique qui est doté d'une capacité de liaison montante à faible bande passante ;
la réception (622) d'informations sur le réseau neuronal provenant du dispositif périphérique, les informations sur le réseau neuronal reçues comportant au moins une partie d'au moins un ou plusieurs éléments d'un ensemble de données, d'une activation ou d'un résultat d'inférence global collecté ou généré dans le dispositif périphérique ;
l'utilisation (624) des informations sur le réseau neuronal reçues pour créer un réseau neuronal entraîné mis à jour en mettant à jour tout ou partie du réseau neuronal initialement entraîné ;
la génération (626-630) d'un modèle de différence de réseau neuronal en comparant le réseau neuronal entraîné mis à jour au réseau neuronal initialement entraîné, dans lequel le modèle de différence de réseau neuronal comprend un patch qui identifie les différences entre le réseau neuronal entraîné mis à jour et le réseau neuronal initialement entraîné via l'un des moyens suivants :
la congélation par couches utilisant une technique de taille minimale ;
la congélation par couches utilisant une technique de delta minimal ;
la congélation par poids utilisant la technique de taille minimale ; ou
la congélation par poids utilisant la technique de delta minimal ;
dans lequel :
la technique de taille minimale comprend la sélection ou la détermination des couches ou des poids à congeler sur la base d'une mesure agrégée de la valeur des poids dans une couche ;
la technique de delta minimal comprend la sélection ou la détermination des couches ou des poids à congeler sur la base d'une mesure des variations agrégées des valeurs de poids, déterminée en comparant les valeurs de poids des couches avant et après un cycle de ré-entraînement ; et
l'envoi (632) du modèle de différence de réseau neuronal au dispositif périphérique.
